# EUROPÄISCHE PATENTSCHRIFT

(11) **EP 2 755 786 B1**
(45) Veröffentlichungstag und Bekanntmachung des Hinweises auf die Patenterteilung: **14.10.2020**
(21) Anmeldenummer: 12753074.9
(22) Anmeldetag: 29.08.2012
(51) Int. Cl.: B23B 31/00, B23B 31/117, B23B 31/20, B23B 31/02

(54) **SPANNZANGESPANNSYSTEM**
COLLET CHUCK CLAMPING SYSTEM
SYSTÈME DE SERRAGE À PINCE DE SERRAGE

(30) Priorität: 15.09.2011 DE 102011113494
(43) Veröffentlichungstag der Anmeldung: 23.07.2014
(73) Patentinhaber: Haimer GmbH, 86568 Hollenbach-Igenhausen (DE)
(72) Erfinder: HAIMER, Franz, 86568 Igenhausen (DE); KÜGLE, Wolfgang, 86551 Aichach - Griesbekerzell (DE)
(74) Vertreter: Bockhorni & Brüntjen Partnerschaft Patentanwälte mbB
(86) Internationale Anmeldenummer: PCT/EP2012/003630
(87) Internationale Veröffentlichungsnummer: WO 2013/037458

(56) Entgegenhaltungen:
- EP-A1- 1 004 378
- EP-A2- 2 292 358
- WO-A1-02/26429
- WO-A1-2010/023412
- DE-A1- 2 743 503
- DE-A1- 3 233 868
- DE-A1- 4 025 944
- DE-A1- 4 115 992
- DE-A1- 19 512 556
- DE-A1- 19 832 793
- DE-A1-102006 028 408
- FR-A1- 2 862 896
- US-A- 2 270 661
- US-A- 3 811 694
- US-B1- 6 339 868
- TIMCHENKO A I ET AL: "RK-3 PROFILE JOINTS IN FLEXIBLE MODULAR TOOLING SYSTEMS", RUSSIAN ENGINEERING RESEARCH, ALLERTON PRESS, NEW YORK, NY, US, Bd. 16, Nr. 10, 1. Januar 1996 (1996-01-01), Seiten 54-62, XP000739700, ISSN: 1068-798X

## Beschreibung

Die vorliegende Erfindung betrifft verdrehsichere Spannzangensysteme gemäß den Oberbegriffen der unabhängigen Patentansprüche 1 bis 3.

Es ist bekannt, Rotationswerkzeuge, wie zum Beispiel Bohrer und insbesondere Fräswerkzeuge, in einer Spannvorrichtung bzw. einem Spannzangensystem einer Werkzeugmaschine zu halten. Solche Spannvorrichtungen umfassen einen Grundkörper mit einem kupplungsseitigen Ende für die Aufnahme in einer Werkzeugmaschine. Des Weiteren umfasst der Grundkörper ein werkzeugseitiges Ende mit einer zur Drehachse des Rotationswerkzeugs konzentrischen Aufnahmebohrung. In dieser Aufnahmebohrung ist ein Schaft des Rotationswerkzeugs ausgehend von dem vorderen Stirnende des werkzeugseitigen Endes des Grundkörpers in axialer Richtung einsteckbar. Innerhalb der Aufnahmebohrung des Grundkörpers ist zudem axial bewegbar eine Spannzange angeordnet, die den Schaft des Rotationswerkzeugs umschließt. Diese Spannzange weist bevorzugt eine konische Form auf, die sich in Richtung des kupplungsseitigen Endes des Grundkörpers verjüngt. Die Spannzange stützt sich auf einem sich gleichsinnig verjüngenden konischen Abschnitt der radialen Innenfläche der Aufnahmebohrung des Grundkörpers ab.

Zur Befestigung der Spannzange und des darin angeordneten Schafts des Rotationswerkzeugs zwingt eine Spannmutter die Spannzange axial in die Aufnahmebohrung des Grundkörpers in Richtung des kupplungsseitigen Endes des Grundkörpers. Beim Anziehen der Spannmutter wird die Spannzange in die konische Aufnahmebohrung des Grundkörpers gepresst, so dass sich der Innendurchmesser der Spannzange verringert und sich die Spannzange radial in der Aufnahmebohrung des Grundkörpers verklemmt. Somit wird die Spannzange wie auch der Schaft des Rotationswerkzeugs kraftschlüssig bzw. reibschlüssig innerhalb des Grundkörpers gehalten.

Gemäß einer weiteren bekannten Alternative eines Spannzangensystems besteht die Spannzange aus einer Schrumpfspannzange, die im Grundkörper bzw. Spannfutter verspannt wird. In einem derartigen System, in dem durch Schrumpfung die Schrumpfspannzange im Grundkörper befestigt wird, ist somit keine zusätzliche Spannmutter erforderlich. Alternativ kann eine Schrumpfspannzange auch als Spannzange verstanden werden, die mit Werkzeug zu einer Einheit mit dem Rotationswerkzeug zusammen geschrumpft wird. Gemäß einem weiteren alternativen Spannsystem wird das Rotationswerkzeug direkt im Grundkörper bzw. Spannfutter verspannt und dadurch befestigt. Entsprechende Beispiele sind ein Schrumpffutter und ein Hydro-Dehnfutter. In diesen aus Grundkörper bzw. Spannfutter und Rotationswerkzeug bestehenden Spannsystemen ist somit weder eine Spannzange noch eine Spannmutter zum Befestigen des Rotationswerkzeugs erforderlich.

Aufgrund ihres konstruktiven Zusammenwirkens wird die Gesamtheit der Elemente Grundkörper, Spannzange und Spannmutter auch als Spannzangensystem bezeichnet. Ein derartiges Spannzangensystem ist beispielsweise in WO 2008/049621 A2 beschrieben.

Im Bereich der Werkzeughalter mit Spannzangensystem für Rotationswerkzeuge kommt es vor allem im Bereich der Schwerzerspanung immer wieder zu Problemen mit der Festigkeit des Spannsystems. Es treten in der Schwerzerspanung hohe Kräfte und Drehmomente auf, die vom Rotationswerkzeug, beispielsweise ein Fräser oder Bohrer, über die das Rotationswerkzeug haltende Spannzange auf den Grundkörper bzw. das Futter übertragen werden. Im Rahmen der Schwerzerspanung kann es vorkommen, dass die auftretenden Kräfte und/oder Drehmomente die Haltekraft zwischen Spannzange und Grundkörper übersteigen. In diesem Fall beginnt sich die Spannzange im Grundkörper zu drehen bzw. durchzurutschen. Dadurch kommt der Arbeitsvorgang zum Erliegen, was zu ungünstigen Produktionsausfallzeiten führt, da das Rotationswerkzeug neu eingespannt werden muss. Es ist jedoch ebenfalls möglich, das der Grundkörper, die Spannzange, das Werkzeug, die Rotationsmaschine und/oder das zu bearbeitende Werkstück aufgrund der auftretenden Zerspanungskräfte beschädigt oder sogar zerstört werden.

Es ist daher das technische Problem vorliegender Erfindung, ein verdrehsicheres Spannzangensystem für ein Rotationswerkzeug bereitzustellen, welches auch im Falle der Schwerzerspanung die Spannzange im Grundkörper verlässlich befestigt, so dass die aus dem Stand der Technik bekannten Nachteile vermieden werden.

Das obige Problem wird durch ein Spannzangensystem gemäß dem unabhängigen Patentanspruch 1, 2 oder 3 gelöst. Vorteilhafte Weiterentwicklungen und Ausführungsformen vorliegender Erfindung ergeben sich aus den anhängenden Ansprüchen, der folgenden Beschreibung sowie den begleitenden Zeichnungen.

Ein Spannzangensystem für ein Rotationswerkzeug mit einer Längsachse und/oder Rotationsachse umfasst einen Grundkörper, insbesondere ein Spannfutter für Dreh- Fräs- oder andere Rotationsmaschinen und dergleichen, mit einer Aufnahmebohrung, eine Spannzange, die in der Aufnahmebohrung des Grundkörpers lösbar angeordnet ist und eine Werkzeugaufnahmebohrung für das Rotationswerkzeug (70) umfasst, sowie vorzugsweise eine Spannmutter, die an dem Grundkörper im Bereich der Aufnahmebohrung befestigbar ist. Die Spannzange ist innerhalb des Grundkörpers zum Zwecke eines Rotationsschlusses kraftschlüssig mit Hilfe einer Spannmutter verspannbar. Alternativ zu einer Spannzange in Kombination mit einer Spannmutterwerden ebenfalls Einpressspannzangen eingesetzt, die ohne eine Spannmutter im Grundkörper bzw. Spannfutter verspannt werden können. Derartige Einpressspannzangen werden mit oder ohne induktives Erwärmen in den Grundkörper bzw. das Spannfutter eingepresst, um das Rotationswerkzeug innerhalb des Grundkörpers bzw. Spannfutters zu verspannen. Es ist ebenfalls möglich, derartige Einpressspannzangen mit Hilfe von kraftübertragenden Vorrichtungen in die Aufnahmebohrung des Grundkörpers bzw. Spannfutters einzupressen. Unabhängig von der gewählten konstruktiven Lösung zum Verspannen der Spannzange im Grundkörper und somit zum Befestigen des Rotationswerkzeugs im Spannzangensystem entsteht eine kraftschlüssige Verbindung zwischen Grundkörper und Rotationswerkzeug, um die zur Bearbeitung eines Werkstücks erforderlichen Kräfte übertragen zu können. Im weiteren Verlauf der Beschreibung bezeichnet der Begriff Einpresspannzange eine Untergruppe der übergeordneten Gruppe der Spannzangen, deren Mitglieder zur Verspannung bzw. Befestigung im Grundkörper bzw. Spannfutter keine Spannmutter benötigen.

Um eine relative Drehung der Spannzangen und Einpressspannzangen gemäß der oben beschriebenen Alternativen gegenüber dem Grundkörper zu sperren, weist das Spannzangensystem mindestens eine erste Verdrehsicherung auf. Diese erste Verdrehsicherung blockiert zusätzlich zur kraftschlüssigen bzw. reibschlüssigen Verbindung zwischen Grundkörper und Spannzange eine Relativbewegung, im speziellen eine Drehung der Spannzange innerhalb des Grundkörpers, bspw. um eine Längsachse der Spannzange. Somit stellt diese erste Verdrehsicherung eine die Stabilität und feste Verbindung des Spannzangensystems unterstützende konstruktive Ausgestaltung dar, um beispielsweise während der Schwerzerspanung die Integrität des Spannzangensystems zu gewährleisten. Vorzugsweise ist die Aufnahmebohrung im Grundkörper zentrisch zur Rotationsachse angeordnet. Es gibt aber auch andere Anwendungen der Erfindung, in denen die Aufnahmebohrung exzentrisch im Grundkörper vorgesehen ist. Während die Werkzeugaufnahmebohrung zentrisch im Spannfutter angeordnet ist, ergibt sich aus der alternativen Anordnung der Aufnahmebohrung im Grundkörper eine konzentrische oder exzentrische Anordnung der Werkzeugaufnahmebohrung und somit des Rotationswerkzeugs bezogen auf die eine Längsachse des Grundkörpers.

Ein erfindungsgemäßes Spannzangensystem kann ergänzend zur ersten Verdrehsicherung eine zweite Verdrehsicherung umfassen, die eine relative Drehung des Rotationswerkzeugs gegenüber der Spannzange sperrt. Konstruktiv wird die zweite Verdrehsicherung dadurch realisiert, dass eine radiale Außenkontur des Rotationswerkzeugs an eine polyedrische oder polyederähnliche radiale Innenkontur der Werkzeugaufnahmebohrung der Spannzange derart anpassbar ist, dass eine formschlüssige Verbindung zwischen Spannzange und Rotationswerkzeug nach Einsetzen des Rotationswerkzeugs in der Werkzeugaufnahmebohrung entsteht. In diesem Zusammenhang ist es bevorzugt, dass ein Werkzeugschaft des Rotationswerkzeugs in seiner äußeren Form an die polyedrische oder polyederähnliche radiale Innenkontur der Werkzeugaufnahmebohrung angepasst ist.

Um die zweite Verdrehsicherung zwischen Spannzange mit Spannmutter und Rotationswerkzeug bereitzustellen, besitzt das Rotationswerkzeug in einem Bereich des Werkzeugschafts vorzugsweise die Form eines Polyeders oder eine polyederähnliche Form. Entsprechend ist die Querschnittsfläche des Werkzeugschafts in diesem Bereich polygonal oder polygonähnlich ausgebildet. Bei einem Polyeder sind mehrere Flächen über die zwischen den Flächen eingeschlossenen Kanten miteinander verbunden. Die Flächen des Polyeders sind eben ausgebildet, während die Kanten eine eckige Form aufweisen. In ihrem Querschnitt besitzt der Polyeder eine polygonale Form. Es ist in vorliegender Erfindung ebenfalls bevorzugt, eine polyederähnliche Form in den Komponenten des Spannzangensystems und daher auch am Werkzeugschaft, in der Aufnahmebohrung des Grundkörpers, in der äußeren Form der Spannzange und in der Werkzeugaufnahmebohrung zu nutzen. Eine polyederähnliche Form umfasst mehrere gebogene Flächen oder eine Mischung aus gebogenen und ebenen Flächen. Diese Flächen schließen abgerundete und/oder eckige Kanten ein, so dass eine einem Polyeder ähnliche Form vorliegt. In ihrem Querschnitt ist diese polyederähnliche Form polygonähnlich ausgebildet. Diese Definition von Polyeder und einer polyederähnlichen Form gilt in gleicher Weise für die erste und zweite Verdrehsicherung und die entsprechenden Komponenten des erfindungsgemäß bevorzugten Spannzangensystems, wie sie weiter unten beschrieben sind.

Die erste Verdrehsicherung wird durch eine formschlüssige Verbindung zwischen dem Grundkörper und der Spannzange in einem Spannzangensystem mit oder ohne Spannmutter realisiert. Als eine weitere Alternative wird die erste Verdrehsicherung in einem Spannzangensystem mit Spannzange und Spannmutter durch eine formschlüssige Verbindung zwischen der Spannzange und der Spannmutter realisiert..

Diese formschlüssige Verbindung als erste Verdrehsicherung ist derart ausgestaltet, dass eine relative Drehung zwischen Grundkörper und Spannzange um die Längsachse zumindest der Spannzange oder der Einpressspannzange gesperrt ist. Es ist weiterhin bevorzugt, diese erste Verdrehsicherung oder erste formschlüssige Verbindung mit Hilfe unterschiedlich geformter sowie unterschiedlich angeordneter ineinandergreifender Elemente zu realisieren. In diesem Zusammenhang ist es beispielsweise bevorzugt, diese ineinandergreifenden Elemente der formschlüssigen Verbindung an den sich gegenüberliegenden radialen Mantelflächen von Spannzange oder Einpressspannzange und Grundkörper auszuformen. Eine weitere Alternative besteht darin, diese den Formschluss bildenden Elemente an der dem Kupplungsende des Grundkörpers zugewandten Stirnseite der Spannzange und einem entsprechend gegenüberliegenden Bereich des Grundkörpers vorzusehen. Es wäre auch denkbar, die den Formschluss bildenden Elemente an der der Spannmutter zugewandten Stirnseite der Spannzange und einem entsprechend gegenüberliegenden Bereich der Spannmutter vorzusehen.

Die erste Verdrehsicherung wird gemäß einer Erfindung durch mindestens ein an der Spannzangeoder dem Grundkörper oder an der Einpressspannzange und dem Grundkörper vorgesehenes Mitnehmerelement gebildet, welches in eine komplementär zum Mitnehmerelement geformte Ausnehmung im Grundkörper und/oder in der Spannzange oder in eine Ausnehmung im Grundkörper und/oder in der Einpressspannzange zur Bildung der formschlüssigen Verbindung eingreift. In diesem Zusammenhang ist gemäß einer Ausführungsform das Mitnehmerelement als ein Steckteil ausgebildet, das in eine dazu passende Öffnung oder Aussparung eingreift. Daraus folgt, dass die an Grundkörper Einpressspannzange und/oder Spannzange gebildete Ausnehmung für das Eingreifen der Mitnehmerelemente einen Hinterschnitt bildet, so dass ein Verdrehen von Grundkörper und Spannzange oder Grundkörper und Einpressspannzange bezogen aufeinander um die Längsachse zumindest der Spannzange oder Einpressspannzange blockiert ist. Zur Realisierung der ersten Verdrehsicherung ist es daher von untergeordneter Bedeutung, welche der im Rahmen der formschlüssigen Verbindung zusammenwirkenden Elemente an Grundkörper, Spannmutter, Spannzange oder Einpressspannzange angeordnet sind. Zudem können die Mitnehmerelemente als Stifte, flächige Stege, in Ausnehmungen angeordnete Nutensteine oder Verzahnungen ausgebildet sein, um nur einige ausgewählte Beispiele zu nennen. Entsprechend ist es bevorzugt, die das Mitnehmerelement aufnehmende Ausnehmung als Bohrung, flächige Ausnehmung ähnlich einem Langloch oder als teilweise offen ausgestaltete radiale Tasche auszuformen. Zudem ist es denkbar, eine zu der oben genannten Verzahnung komplementäre Verzahnung mit aneinander angrenzenden oder beabstandeten Vertiefungen als Ausnehmungen zu realisieren. Auch dies sind ausgewählte exemplarische Ausführungsformen.

Im Rahmen vorliegender Erfindung ist es aus konstruktiven Gründen bevorzugt, mehrere Mitnehmerelemente, vorzugsweise drei Mitnehmerelemente, symmetrisch und/oder gleichmäßig um die Rotationsachse der Spannzange oder Einpressspannzange und voneinander gleichmäßig beabstandet anzuordnen und als Eingriffsnasen auszubilden. Derartige Mitnehmerelemente oder Eingriffsnasen sind an einer dem Grundkörper zugewandten Stirnseite der Spannzange oder Einpressspannzange angeordnet und erstrecken sich parallel zur Längsachse der Spannzange bzw. Einpressspannzange als axial verlaufende Mitnehmerelemente. Diese axialen Mitnehmerelemente greifen in passend zu den Mitnehmerelementen geformte Ausnehmungen im Grundkörper ein. Zur weiteren Unterstützung der Stabilität des Spannzangensystems und zur verlässlichen Befestigung eines Rotationswerkzeugs in der Spannzange oder Einpressspannzange ist es ebenfalls bevorzugt, die axialen Mitnehmerelemente an einer radial einwärts gerichteten Fläche mit einer Profilierung, vorzugsweise einer oder mehreren umfänglich verlaufenden Rillen, auszustatten, so dass die Verbindung zwischen Spannzange oder Einpressspannzange und Rotationswerkzeug unterstützt wird. Es ist zudem eine bevorzugte Ausführungsform vorliegender Erfindung, die Ausnehmungen im Grundkörper zur Aufnahme der Mitnehmerelemente der Spannzange oder Einpressspannzange radial einwärts bezogen auf den Grundkörper offen auszuführen. Die Ausnehmungen sind somit ähnlich einer Tasche geformt, um beispielsweise eine platzsparende und gewichtsparende Anordnung des Spannzangensystems zu realisieren.

Gemäß einer vorliegenden Erfindung wird die erste Verdrehsicherung durch mindestens eine zum Teil polyedrische oder polyederähnliche radial äußere Form der Spannzange und eine daran angepasste radial innere zumindest teilweise polyedrische oder polyederähnliche Form der Aufnahmebohrung des Grundkörpers gebildet. Im Hinblick auf Polyeder und polyederähnlich gelten die bereits oben gelieferten Definitionen. Die polyedrische oder polyederähnliche äußere Form der Spannzange und die polyedrische oder polyederähnliche innere Form der Aufnahmebohrung sind bezüglich ihrer Kontaktflächen jeweils zueinander komplementär ausgebildet. Während bei üblichen Spannzangenkonstruktionen bisher eine konische oder kegelstumpfartige äußere Form der Spannzange genutzt worden ist, wird nun die Spannzange in Form eines Polyeders oder einer dem Polyeder ähnlichen Form realisiert. Komplementär zu der Außenkontur des Polyeders oder zur polyederähnlichen Form wird die Aufnahmebohrung im Grundkörper ausgeformt, so dass sich die Flächen des Spannzangenpolyeders oder einer ähnlichen Form an den Innenflächen des Polyeders oder einer polyederähnlichen Form der Aufnahmebohrung des Grundkörpers abstützen. Da die Kanten des Spannzangenpolyeders oder einer polyederähnlichen Form ein Drehen innerhalb der Aufnahmebohrung des Grundkörpers blockieren, wird somit auf eine weitere konstruktive Alternative die erste Verdrehsicherung bereitgestellt.

Gemäß einer weiteren bevorzugten Ausführungsform vorliegender Erfindung umfasst das Spannzangensystem das bereits oben genannte Rotationswerkzeug mit einem Werkzeugschaft. Der Werkzeugschaft wird durch kraftschlüssiges Verspannen innerhalb der Spannzange oder der Einpressspannzange im Spannzangensystem befestigt. Eine axiale Auszugssicherung ist durch eine bevorzugte konstruktive Ausgestaltung von Spannzange oder Einpressspannzange und Werkzeugschaft zwischen der Spannzange und dem Rotationswerkzeug realisiert, so dass ein axiales Auswandern des Rotationswerkzeugs in Richtung der Längsachse verhindert ist. Vorzugsweise wird diese axiale Auszugssicherung und/oder Verdrehsicherung durch eine formschlüssige Verbindung zwischen Spannzange oder Einpressspannzange und Werkzeugschaft des Rotationswerkzeugs bereitgestellt. Diese optionale axiale Auszugssicherung des Rotationswerkzeugs sorgt für eine zusätzliche Stabilisierung der Integrität des gesamten Spannzangensystems mit Rotationswerkzeug während des Betriebs. Auf diese konstruktive Weise werden die Komponenten Rotationswerkzeug und Spannzange stabiler miteinander verbunden, während die oben beschriebene erste Verdrehsicherung des Spannzangensystems für ein verlässliches Halten der Spannzange oder Einpressspannzange mit Rotationswerkzeug innerhalb des Grundkörpers sorgt.

Vorzugsweise wird die axiale Auszugssicherung durch eine oder mehrere über den Umfang der Spannzange oder Einpressspannzange verteilt angeordnete Mitnehmerglieder gebildet, die in über den Umfang verteilt auf dem Werkzeugschaft angeordnete Sperrnuten eingreifen. Diese Sperrnuten sind in ihrer Länge und Form variabel. Um aber die Funktionalität der axialen Auszugssicherung des Rotationswerkzeugs umzusetzen, sind die Sperrnuten mindestens über einen Teil ihrer Länge schraubenförmig, wendelförmige oder ähnlich kurvenförmig ausgebildet. Zudem ist eine derartige axiale Auszugssicherung durch einen bajonettähnlichen Verschluss zwischen Mitnehmerglied und Sperrnut realisierbar. In diesem Fall verläuft die Sperrnut vorzugsweise L-förmig, so dass sich der längere L-Schenkel in Richtung der Rotationsachse am Werkzeugschaft erstreckt, während der kürzere L-Schenkel in Drehrichtung des Rotationswerkzeugs angeordnet ist. Die Auszugssicherung kann zweckmäßigerweise auch als Verdrehsicherung herangezogen werden.

Gemäß einer weiteren bevorzugten Ausgestaltung vorliegender Erfindung sind die Mitnehmerglieder durch Nutensteine realisiert. Vorzugsweise werden drei Nutensteine über den Umfang der inneren radialen Mantelfläche der Spannzange oder Einpressspannzange verteilt angeordnet und in der Spannzange oder Einpressspannzange gehalten. Die Nutensteine bilden über ihren Formschluss mit den Sperrnuten des Werkzeugschafts die axiale Auszugssicherung des Rotationswerkzeugs innerhalb der Spannzange oder Einpressspannzange. Um eine verlässliche Befestigung der Nutensteine in Ausnehmungen der radial inneren Mantelfläche der Spannzange oder Einpressspannzange innerhalb der Werkzeugaufnahmebohrung der Spannzange oder Einpressspannzange zu realisieren, werden vorzugsweise O-Ringe, Sprengringe, Federringe oder eine passende Verklebung des Nutensteins in der entsprechenden Ausnehmung genutzt. Da die Nutensteine für einen optimalen Eingriff in die entsprechenden Sperrnuten des Werkzeugsschafts vorzugsweise formangepasst sind, werden die Nutensteine auch gemäß einer weiteren Ausführungsform vorliegender Erfindung lageorientiert in entsprechenden Ausnehmungen der Spannzange oder Einpressspannzange angeordnet. Aufgrund der Formgebung von Ausnehmung und Nutenstein wird sichergestellt, dass das jeweilige Mitnehmerglied bzw. der Nutenstein nur lageorientiert, vorzugsweise gemäß einer definierten Orientierung, in der entsprechenden Vertiefung der Spannzange oder Einpressspannzange einsetzbar und befestigbar ist. Während darüber das optimale Zusammenwirken von Spannzange und Werkzeugschaft des Rotationswerkzeugs garantiert wird, vermeidet die aneinander angepasste Formgebung von Ausnehmung und Nutenstein eine Fehlinstallation des Nutensteins und somit eine Beschädigung des Rotationswerkzeugs bzw. eine Beeinträchtigung der Funktionsfähigkeit. Gemäß einer weiteren konstruktiven Alternative ist es bevorzugt, die Mitnehmerglieder integral bzw. einstückig mit der Spannzange oder Einpressspannzange auszubilden.

Um das Rotationswerkzeug verlässlich in oben beschriebenem Spannzangensystem nutzen zu können, ist es erforderlich, das Spannzangensystem und das Rotationswerkzeug mit einem entsprechenden Installationsverfahren zu installieren. Dabei wird zunächst der Grundkörper des Spannzangensystems mit der Aufnahmebohrung bereitgestellt. In diese Aufnahmebohrung des Grundkörpers setzt man die Spannzange oder Einpressspannzange ein, so dass die als erste Verdrehsicherung genutzte formschlüssige Verbindung zwischen dem Grundkörper und der Spannzange oder Einpressspannzange hergestellt wird, die eine relative Drehung der Spannzange oder Einpressspannzange gegenüber dem Grundkörper sperrt. Ergänzend dazu oder alternativ wird das Rotationswerkzeug derart in die Spannzange oder Einpressspannzange eingesetzt, dass eine formschlüssige Verbindung zwischen Spannzange bzw. Einpressspannzange und Rotationswerkzeug über die polyedrische oder polyederähnliche radiale Innenkontur der Werkzeugaufnahmebohrung der Spannzange oder Einpressspannzange und die daran angepasste radiale Außenkontur des Rotationswerkzeugs hergestellt wird. Diese formschlüssige Verbindung bildet die zweite Verdrehsicherung und sperrt eine relative Drehung des Rotationswerkzeugs gegenüber der Spannzange oder Einpressspannzange und aufgrund der ersten Verdrehsicherung auch gegenüber dem Grundkörper.

Zudem wird der Schaft des Rotationswerkzeugs in die Spannzange oder die Einpressspannzange eingesetzt. Dieser Schritt kann vor oder nach dem Einsetzen der Spannzange in die Aufnahmebohrung des Grundkörpers erfolgen. Abschließend befestigt man das Rotationswerkzeug in der Spannzange mit Hilfe der Spannmutter oder alternativ in der Einpressspannzange über andere bekannte Befestigungs- oder Verspannverfahren. Diese Spannmutter wird auf ein entsprechend vorgesehenes Gewinde an dem dem Werkzeug zugewandten Ende des Grundkörpers aufgeschraubt und presst dadurch die Spannzange in die Aufnahmebohrung des Grundkörpers. Auf diese Weise verhindert die Spannmutter gleichzeitig ein Lösen der formschlüssigen Verbindung zwischen Grundkörper und Spannzange.

Im Zusammenhang mit allen erfindungsgemäßen Spannzangensystemen ist es zudem bevorzugt, eine Reduzierhülse in Kombination mit dem Rotationswerkzeug einzusetzen. Eine derartige Reduzierhülse dient dem Anpassen eines Werkzeugschafts des Rotationswerkzeugs in eine zu große Werkzeugaufnahmebohrung der Spannzange oder der Einpressspannzange des Grundkörpers. Um die erfindungsgemäß bereitgestellte Verdrehsicherung trotz des Einsatzes der Reduzierhülse nicht aufzuheben, ist die äußere radiale Hülsenform der Reduzierhülse an die radiale Innenwand der Werkzeugaufnahme der Spannzange oder Einpressspannzange oder die radiale Innenwand der Aufnahmebohrung des Grundkörpers angepasst. Weist also die radiale Innenwand von Werkzeugaufnahmebohrung der Spannzange oder Einpressspannzange eine polyedrische oder polyederähnliche Gestalt auf, so wird die radial äußere Hülsenform der Reduzierhülse bevorzugt komplementär dazu ausgebildet. In gleicher Weise wird die radial innere Hülsenform der Reduzierhülse an die radial äußere Form des Werkzeugschafts des Rotationswerkzeugs angepasst. Sollte der Werkzeugschaft des Rotationswerkzeugs eine polyedrische oder polyederähnliche Form aufweisen, so wird die radial innere Hülsenform der Reduzierhülse vorzugsweise komplementär dazu ausgebildet. Ist der Werkzeugschaft des Rotationswerkzeugs hingegen mit Sperrnuten oder dergleichen ausgestattet, so wird vorzugsweise die radial innere Hülsenform rund ausgeformt und mit Mitnehmergliedern ausgestattet, die in die Sperrnuten des Werkzeugschafts eingreifen können.

Die bevorzugten Ausführungsformen vorliegender Erfindung werden unter Bezugnahme auf die begleitende Zeichnung näher erläutert. Es zeigen:
- Fig. 1: eine schematische perspektivische Explosionsdarstellung einer bevorzugten Ausführungsform des erfindungsgemäßen Spannzangensystems mit Rotationswerkzeug,

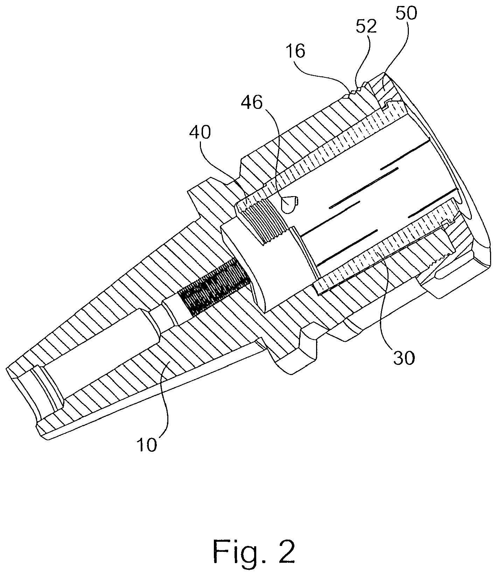

- Fig. 2: eine schematische perspektivische Schnittansicht einer weiteren bevorzugten Ausführungsform des erfindungsgemäßen Spannzangensystems ohne Rotationswerkzeug,
- Fig. 3: eine seitliche schematische Schnittansicht des Spannzangensystems ohne Rotationswerkzeug aus Fig. 2,
- Fig. 4: eine seitliche Teilschnittansicht einer bevorzugten Ausführungsform des Grundkörpers mit einer bevorzugten Ausführungsform der installierten Spannzange des erfindungsgemäßen Spannzangensystems,
- Fig. 5: eine seitliche Teilschnittansicht der Spannzange aus Fig. 4,
- Fig. 6: eine seitliche Schnittansicht der Spannmutter aus Fig. 3,
- Fig. 7: eine perspektivische Ansicht einer bevorzugten Ausführungsform eines Mitnehmerglieds, insbesondere ein Nutenstein,
- Fig. 8a: eine schematische Schnittansicht einer bevorzugten Ausführungsform von Grundkörper und Spannzange mit Nutensteinen entlang einer Schnittebene senkrecht zur Rotationsachse des erfindungsgemäß bevorzugten Spannzangensystems,
- Fig. 8b: eine Schnittansicht einer abgeänderten Ausführungsform gemäß Figur 8a, wobei nunmehr auch eine Verdrehsicherung zwischen Spannzange und Grundkörper realisiert ist,
- Fig. 9: eine schematische Schnittansicht einer weiteren bevorzugten Ausführungsform von Grundkörper und Spannzange mit Nutenseiten entlang einer Schnittebene senkrecht zur Rotationsachse des erfindungsgemäß bevorzugten Spannzangensystems,
- Fig. 10: eine schematische Schnittansicht einer bevorzugten Anordnung eines Nutensteins in der Spannzange,
- Fig. 11: vergrößerte Darstellung des eingekreisten Bereichs einer bevorzugten Anordnung eines Nutensteins in der Spannzange gemäß Fig. 9.
- Fig. 12: eine perspektivische Ansicht einer weiteren bevorzugten Ausführungsform einer Spannzange mit polyederähnlicher Innen- und Außenkontur,
- Fig. 13: eine perspektivische Ansicht einer bevorzugten Ausführungsform des Grundkörpers mit einer polyederähnlichen Innenkontur der Aufnahmebohrung,
- Fig. 14: eine perspektivische Schnittansicht des Grundköpers aus Fig. 13,
- Fig. 15: eine perspektivische Explosionsdarstellung einer weiteren bevorzugten Ausführungsform des erfindungsgemäßen Spannzangensystems,
- Fig. 16: eine Draufsicht auf eine bevorzugte Ausführungsform des Grundkörpers mit einer polyederähnlichen Aufnahmebohrung mit Spannzange,
- Fig. 17: eine Draufsicht auf eine Stirnseite einer bevorzugten Ausführungsform der Spannzange mit polyederähnlicher Außenkontur und runder Innenkontur,
- Fig. 18: eine Draufsicht auf eine Stirnfläche einer bevorzugten Ausführungsform einer Spannzange mit runder Innenkontur und polyederähnlicher Außenkontur,
- Fig. 19: eine perspektivische Ansicht einer bevorzugten Ausführungsform einer Spannzange mit runder Innenkontur und polyederähnlicher Außenkontur,
- Fig. 20: eine perspektivische Darstellung einer bevorzugten Ausführungsform einer Spannzange mit runder Außenkontur und polyederähnlicher Innenkontur und axial vorstehenden Mitnehmerelementen,
- Fig. 21: eine Draufsicht auf die Stirnseite mit Mitnehmerelementen der Spannzange aus Fig. 20,
- Fig. 22: eine Draufsicht auf die Stirnseite ohne Mitnehmerelemente der Spannzange auf Fig. 20,
- Fig. 23: eine perspektivische Ansicht eines bevorzugten Fräsers mit einem polyederähnlichen Werkzeugschaft,
- Fig. 24: eine Draufsicht auf die Werkzeugspitze des Fräsers aus Fig. 23,
- Fig. 25: eine Draufsicht auf die Stirnseite des polyederähnlichen Werkzeugschafts des Fräsers aus Fig. 23,
- Fig. 26: eine perspektivische Ansicht eines bevorzugten Drehstahls mit einem polyederähnlichen Werkzeugschaft,
- Fig. 27: eine Draufsicht auf die Stirnseite des polyederähnlichen Werkzeugschafts des Drehstahls aus Fig. 26,
- Fig. 28: eine perspektivische Ansicht einer bevorzugten Spannzange mit polyederähnlicher Außenkontur und Ausnehmungen für Mitnehmerglieder.
- Fig. 29: eine schematische perspektivische Explosionsansicht eines zum erfindungsgemäß bevorzugten Spannzangensystem der Fig. 15 ähnlichen Spannzangensystems mit einer bevorzugten Reduzierhülse zwischen Rotationswerkzeug und Spannzange und
- Fig. 30: eine perspektivische Explosionsdarstellung einer weiteren bevorzugten Ausführungsform des erfindungsgemäßen Spannzangensystems mit Grundkörper, Spannzange und Spannmutter, in der die Spannzange als Schrumpfspannzange ausgeführt ist.

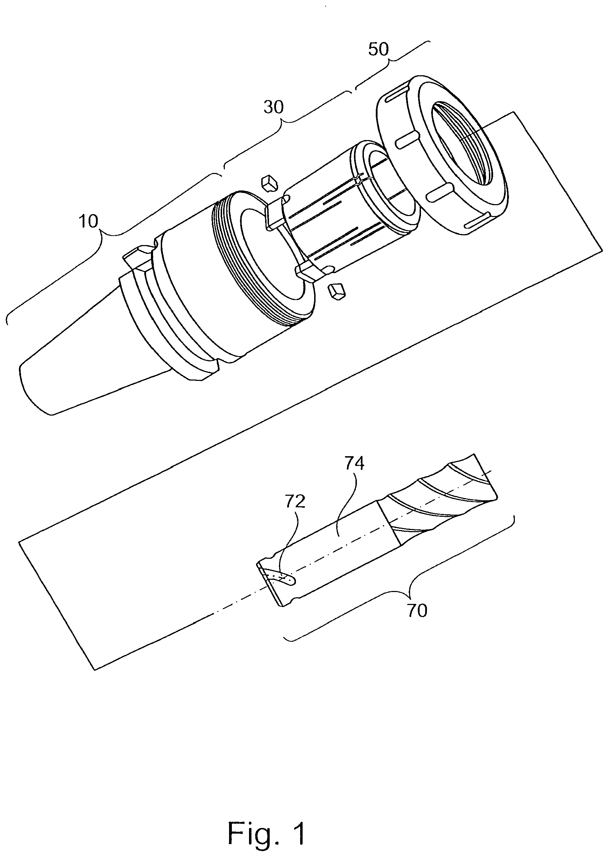

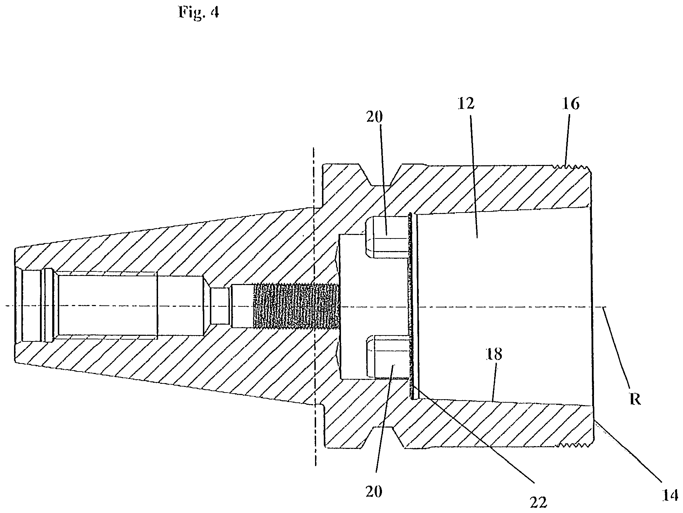

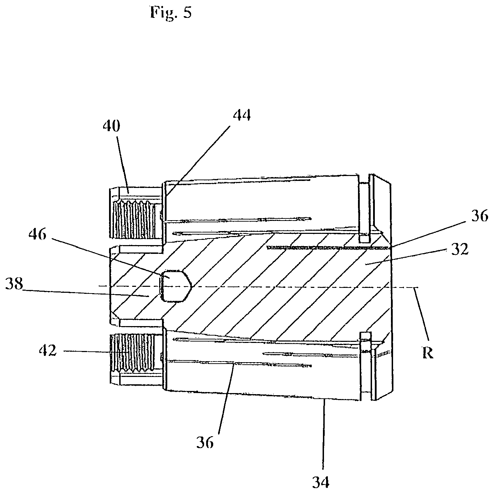

Fig. 1 zeigt eine perspektivische Explosionsansicht einer bevorzugten Ausführungsform des erfindungsgemäßen Spannzangensystems 1. Das Spannzangensystem 1 umfasst eine bevorzugte Ausgestaltung eines Grundkörpers 10, der auch in einer seitlichen Schnittansicht in Fig. 4 gezeigt ist. In eine Aufnahmebohrung 12, die in dieser Ausführungsform konzentrisch um eine Längsachse R des Spannzangensystems 1 angeordnet ist, ist eine Spannzange 30 von einem werkzeugseitigen Stirnende 14 des Grundkörpers 10 axial einsteckbar. Wie man Figur 1 entnehmen kann, ist die hier gezeigte Ausführungsform des Spannzangensystems 1 rotationssymmetrisch zur Längsachse R angeordnet. Das bedeutet, dass die Aufnahmebohrung 12 des Grundkörpers 10 zentrisch angeordnet ist. Somit ist die Längsachse R des Grundkörpers 10 der Spannzange 30, der Spannmutter 50 sowie des Rotationswerkzeugs 70 parallel zur Rotationsachse des in Figur 1 gezeigten Spannzangensystems 1. Es ist jedoch ebenfalls bevorzugt, dass die Aufnahmebohrung 12 des Grundkörpers 10 nicht konzentrisch zur Rotationsachse des Spannzangensystems 1 angeordnet ist. Eine derartige Konstruktion wird gewählt, wenn das Spannzangensystem 1 zwar ein Rotationswerkzeug 70 befestigt, sich selbst aber nicht dreht. Aus diesen unterschiedlichen Konstruktionsalternativen folgt, dass der in der weiteren Beschreibung genutzte Bezug auf die Rotationsachse R des Spannzangensystems 1 auch exemplarisch für einen Bezug auf die Längsachse des Spannzangensystems 1 und seiner einzelnen Komponenten steht. Die bevorzugte Spannzange 30 ist innerhalb der Aufnahmebohrung 12 des Grundkörpers 10 axial bewegbar. Die Spannzange 30 weist konzentrisch zur Rotationsachse R eine Werkzeugaufnahmebohrung 32 auf, wie die seitliche Schnittansicht der bevorzugten Spannzange 30 in Fig. 5 veranschaulicht. Innerhalb der Werkzeugaufnahmebohrung 32 ist ein Schaft 74 eines Rotationswerkzeugs (siehe Fig. 1) aufnehmbar, wobei eine Längsachse des Rotationswerkzeugs 70 dann parallel zur Rotationsachse R angeordnet ist. In diesem Zusammenhang bekannte Rotationswerkzeuge sind Bohrer, Fräser und dergleichen.

Zur Befestigung des Rotationswerkzeugs 70 im Spannzangensystem 1 wird die Spannzange 30 mit Rotationswerkzeug 70 in die Aufnahmebohrung 12 des Grundkörpers 10 mit Hilfe einer Spannvorrichtung axial eingepresst. Vorzugsweise wird als axiale Spannvorrichtung eine Spannmutter 50 genutzt, die über ein Innengewinde 52 an der Spannmutter 50 auf ein am werkzeugseitigen Ende des Grundkörpers 10 befindliches Gewinde 16 auf den Grundkörper 10 aufgeschraubt wird. Während des Aufschraubens der Spannmutter 50 auf den Grundkörper 10 zwingt die Spannmutter 50 derart die Spannzange 30 in die Aufnahmebohrung 12, dass eine kraftschlüssige bzw. reibschlüssige Verbindung zwischen dem Grundkörper 10, der Spannzange 30 und dem Rotationswerkzeug 70 entsteht. Als Zangenspannvorrichtung kommen auch andere Vorrichtungen in Betracht, die beispielsweise in DE 157 29 249 C2 und DE 44 05 242 A1 beschrieben sind.

Es ist des Weiteren erfindungsgemäß bevorzugt, eine Spannzange 30 in Kombination mit dem Grundkörper 10 einzusetzen, die ohne die Verwendung einer Spannmutter 50 in der Aufnahmebohrung 12 des Grundkörpers 10 einpressbar ist. Derartige Spannzangen 30, werden in der weiteren Beschreibung als Einpressspannzange bezeichnet, um damit den Aspekt der fehlenden Spannmutter hervorzuheben. Derartige Einpressspannzangen werden beispielsweise in die Aufnahmebohrung 12 des Grundkörpers 10 eingeschrumpft, indem der Grundkörper 10 zuvor induktiv erwärmt worden ist. Derartige Befestigungen von Einpressspannzangen im Grundkörper 10 ohne die Nutzung einer Spannmutter 50 sind allgemein im Stand der Technik bekannt. Im Hinblick auf die erfindungsgemäß bevorzugten Einpressspannzangen wird an dieser Stelle hervorgehoben, dass diese Einpressspannzangen die gleichen konstruktiven Eigenschaften aufweisen wie die der in den Anmeldungsunterlagen beschriebenen Spannzange 30, solange sich die konstruktiven Eigenschaften der Spannzange 30 nicht auf ein Zusammenwirken mit der Spannmutter 50 beziehen. Daher ist die Einpressspannzange in gleicher konstruktiver Abstimmung mit dem Grundkörper 10, dem Rotationswerkzeug 70 und einer Reduzierhülse 60 ausgebildet, wie es für die Spannzange 30 gemäß den unterschiedlichen Ausführungsformen vorliegender Erfindung der Fall ist.

Die Spannzange 30 hat vorzugsweise eine sich konisch in Richtung des Grundkörpers 10 verjüngende Form, die durch eine radial äußere Mantelfläche 34 gebildet wird. Die Mantelfläche 34 stützt sich an einer inneren Mantelfläche 18 der Aufnahmebohrung 12 des Grundkörpers 10 ab, wobei die Aufnahmebohrung 12 komplementär zur äußeren Form der Spannzange 30 ausgebildet ist. Vorzugsweise besitzt die konische Form von Aufnahmebohrung 12 und radial äußerer Mantelfläche 34 einen Neigungswinkel von 8° bis 2°, noch mehr bevorzugt kleiner als 3° oder zwischen 2° und 2,5° bezogen auf die Rotationsachse oder Längsachse R. Diese Winkel der konischen Form sind deshalb bevorzugt, weil es nur in diesem Winkelbereich möglich ist, daß die maximale für die Spannwirkung zur Verfügung stehende Fläche zwischen Spannzange und Grundkörper auch tatsächlich für die Spannwirkung implementiert werden kann. Neben der konischen Form von Spannzange 30 und Aufnahmebohrung 12 des Grundkörpers 10 sind auch zusätzliche zylindrische Abschnitte oder andere Formgestaltungen an der Spannzange 30 denkbar, um die verlässliche Anordnung der Spannzange 30 im Grundkörper 10 zu unterstützen.

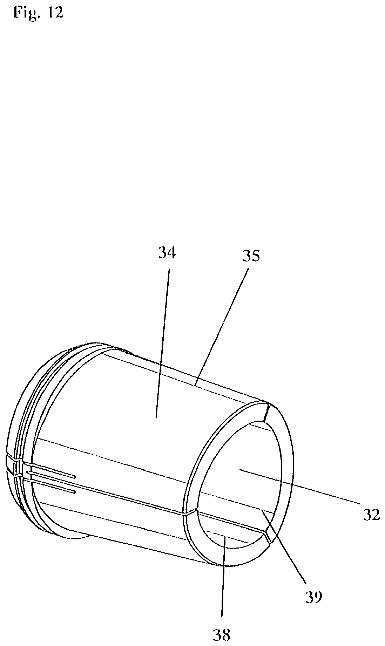

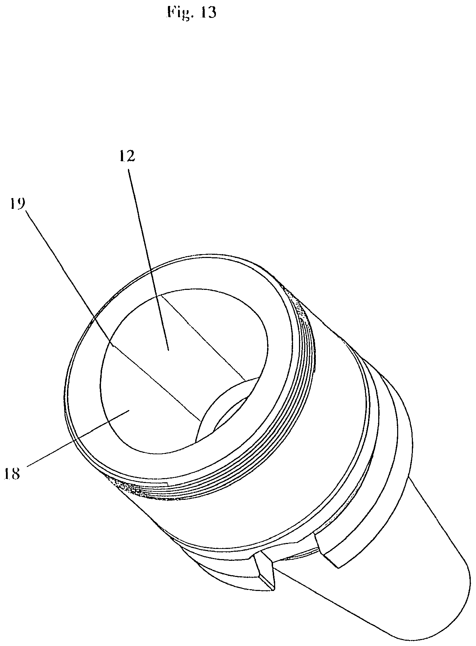

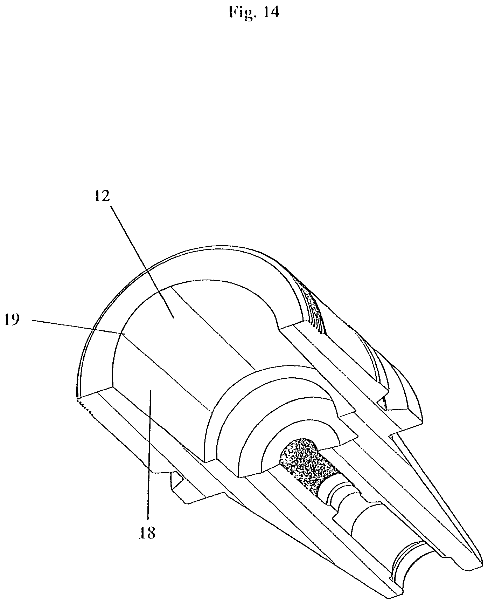

Gemäß einer bevorzugten konstruktiven Alternative vorliegender Erfindung verjüngt sich die Spannzange 30 in Richtung des Grundkörpers 10 in polyedrischer (nicht gezeigt) oder polyederähnlicher Form. Die radial äußere Mantelfläche 34 besteht daher aus mehreren um die Längsachse der Spannzange 30 angeordneten polyederähnlichen Flächen. Bevorzugt sind diese polyederähnlichen Flächen gebogen und werden über abgerundete Kanten 35 miteinander verbunden. Eine entsprechende Ausführungsform derartiger Spannzangen 30 ist in Fig. 12 gezeigt. Die gezeigte Spannzange 30 hat eine polyederähnliche Innen- 32 und Außenfläche 34. Die polyederähnliche Außenkontur wird in eine komplementär dazu geformte polyederähnliche Aufnahmebohrung 12 des Grundkörpers 10 eingesetzt, wie sie in den Figuren 13 und 14 gezeigt ist. Die Aufnahmebohrung 12 des Grundkörpers 10 umfasst entsprechend polyederähnliche Flächen an der inneren Mantelfläche 18, die über abgerundete Kanten 19 miteinander verbunden sind.

Somit bildet die polyederähnliche Form von Spannmutter 30 und Aufnahmebohrung 12 des Grundkörpers 10 die erste Verdrehsicherung.

Analog zur polyederähnlichen Form kann jede polyederähnliche Form der Komponenten des Spannfutters 1 auch als Polyeder ausgebildet sein.

Diese polyederähnlichen Flächen der radial äußeren Mantelfläche 34 stützen sich an der komplementär dazu ausgebildeten polyederähnlichen inneren Mantelfläche 18 der Aufnahmebohrung 12 des Grundkörpers 10 ab. Die innere Mantelfläche 18 weist entsprechend polyederähnliche Kanten 19 auf, die mit den polyederähnlichen Kanten 35 der Spannzange 30 zusammenwirken. Somit ist auch gemäß dieser konstruktiven Alternative die Aufnahmebohrung 12 komplementär zur äußeren Form der Spannzange 30 ausgebildet. Zudem gelten die gleichen Regeln für die winklige Anordnung der polyederähnlichen Flächen, wie sie oben im Zusammenhang mit der konischen Form der Spannzange beschrieben worden sind. Die Nutzung der Spannzange 30 in polyederähnlicher Form realisiert nach Einsetzen der Spannzange 30 in der Aufnahmebohrung 12 des Grundkörpers 10 eine formschlüssige Verbindung zwischen Spannzange 30 und Grundkörper 10. Diese formschlüssige Verbindung sorgt für eine Verdrehsicherung der Spannzange 30 und des Grundkörpers 10 relativ zueinander um zumindest die Längsachse der Spannzange 30. Sollte der Grundkörper 10 eine zentrisch angeordnete Aufnahmebohrung aufweisen, dann realisiert die polyederähnliche Form der Spannzange 30 innerhalb der Aufnahmebohrung 12 eine Verdrehsicherung um die Längsachse wie auch die Rotationsachse R des Spannzangensystems 1.

Basierend auf der bevorzugten polyederähnlichen oder polyedrischen Form der Spannzange 30, die auch als unrunde Form verallgemeinert werden kann, hat diese einen Querschnitt in Form eines Dreiecks, eines Fünfecks oder in Form eines Sterns, um nur einige ausgewählte Beispiele zu nennen. Basierend auf der polyederähnlichen oder polyedrischen Form der Spannzange kann auf die unten näher beschriebenen Mitnehmerelemente 40, die in dafür vorgesehene Ausnehmungen 20 eingreifen, verzichtet werden, da aufgrund der Form der Spannzange 30 eine ausreichende Verdrehsicherung zwischen Grundkörper 10 und Spannzange 30 bereitgestellt wird.

Fig. 13 zeigt die Spannzange 30 mit bevorzugt polyederähnlicher Außenkontur und polyederähnlicher Innenkontur. Die polyedrische oder polyederähnliche Innenkontur gewährleistet die zweite Verdrehsicherung zwischen Spannzange 30 und Rotationswerkzeug 70, wie sie unten näher erläutert ist.

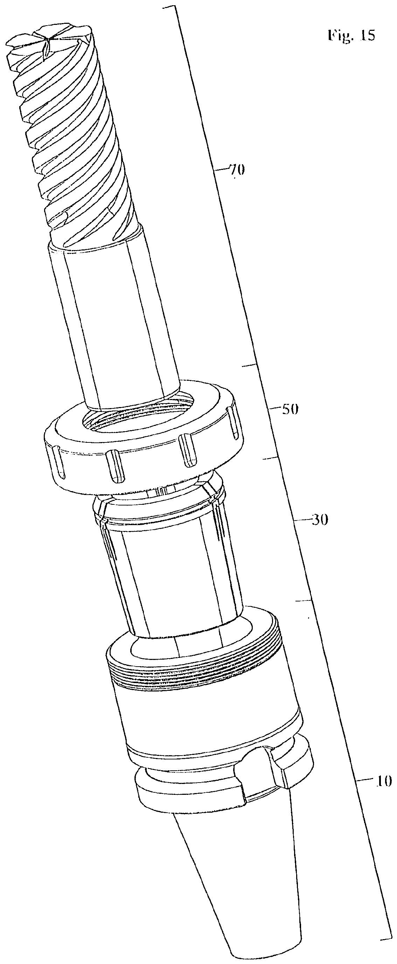

Figuren 13 und 14 zeigen eine perspektivische Ansicht und eine Teilschnittansicht des Grundkörpers 10 mit einer polyederähnlichen Aufnahmebohrung 12. Fig. 15 zeigt entsprechend eine perspektivische Explosionsansicht des Spannzangensystems 1 gemäß einer weiteren bevorzugten Ausführungsform mit Grundkörper 10, Spannzange 30, Spannmutter 50 und Rotationswerkzeug 70. Die Spannzange 30 mit einer polyederähnlichen Innen- und Außenkontur ist in die polyederähnliche Aufnahmebohrung 12 des Grundkörpers 10 einsetzbar. Der Werkzeugschaft 74 des Rotationswerkzeugs 70 ist ebenfalls polyederähnlich geformt und wird von der polyederähnlichen Werkzeugaufnahmebohrung 32 verdrehsicher aufgenommen.

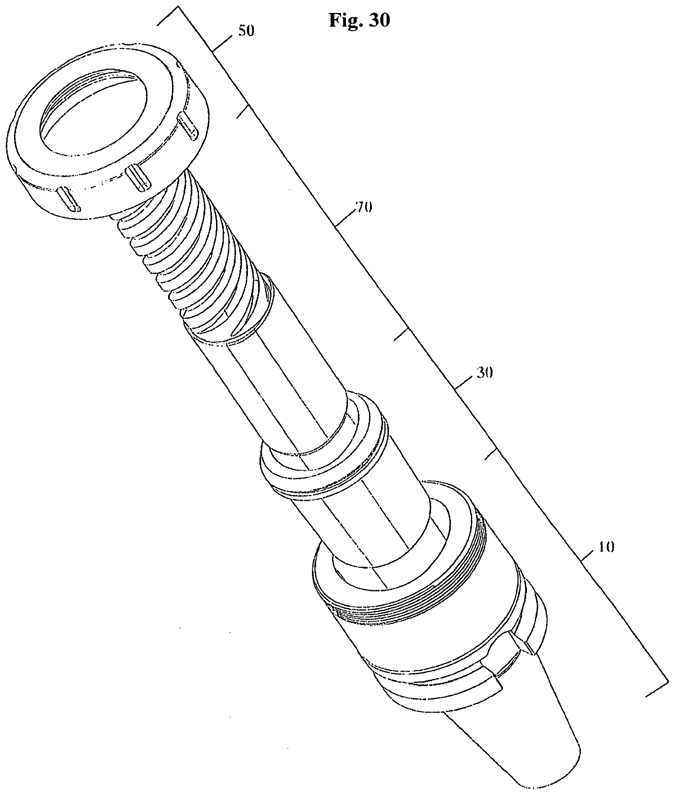

Eine weitere bevorzugte Ausführungsform des Spannzangensystems 1 zeigt Fig. 30. In dieser Ausführungsform ist die Spannzange 30 als Schrumpfspannzange realisiert. Das Rotationswerkzeug 70 wird in die Schrumpfspannzange 30 eingeschrumpft und bildet damit eine Einheit 30, 70. Diese Einheit 30, 70 aus Schrumpfspannzange 30 und Rotationswerkzeug 70 wird ihrerseits wiederum in die Aufnahmebohrung 12 des Grundkörpers 10 aufgenommen. Die Schrumpfverbindung zwischen dem Rotationswerkzeug 70 und der Schrumpfspannzange 30 kann erfindungsgemäß durch die oben genannte Verdrehsicherung und/oder eine axiale Auszugssicherung gesichert werden, wie sie auch in den anderen Ausführungsformen beschrieben ist. Außerdem kann eine derartige Verdrehsicherung und/oder Auszugssicherung ebenfalls in der Verbindung dieser Einheit 30, 70 mit dem Grundkörper 10 vorgesehen sein. Mit Hilfe der Spannmutter 50 wird die Einheit aus Schrumpfspannzange 30 und Rotationswerkzeug 70 im Grundkörper 10 gesichert.

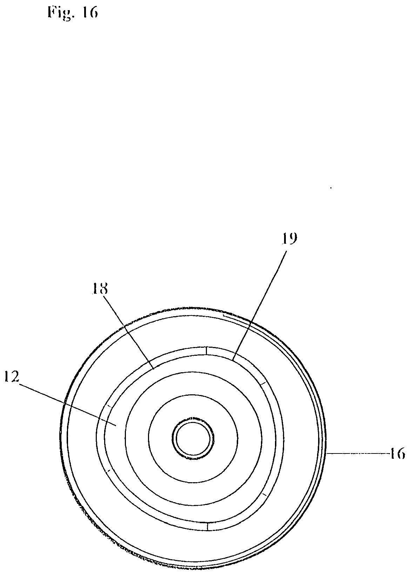

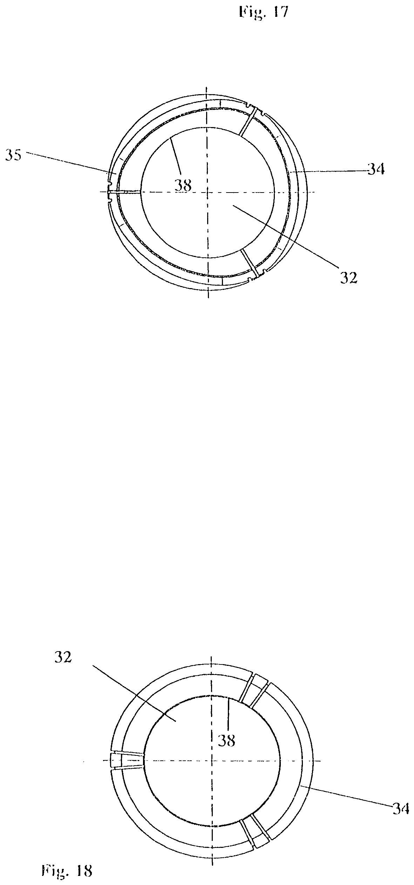

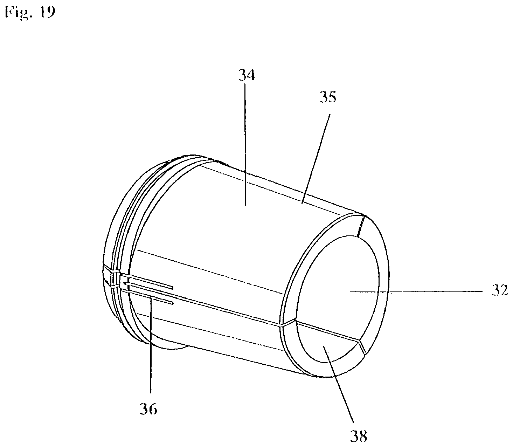

Fig. 16 zeigt eine Draufsicht auf eine Stirnseite des Grundkörpers 10, in den eine Spannzange 30 mit polyederähnlicher Außenkontur und runder Innenkontur der Werkzeugaufnahmebohrung 32 eingesetzt ist. Die Figuren 17 und 18 zeigen die Stirnseiten der Spannzange 30, die eine polyederähnliche Außenkontur und eine runde Innenkontur aufweist. Eine perspektivische Ansicht der Spannzange 30 aus den Figuren 16 bis 18 zeigt Fig. 19. In Analogie zu den konstruktiven Eigenschaften der Spannzange 30 weist die Einpressspannzange (nicht gezeigt), die ohne Spannmutter 50 im Grundkörper 10 befestigt wird, die gleichen konstruktiven Merkmale wie die Spannzange 30 auf.

Des Weiteren weist bevorzugt die Spannzange 30 in Umfangsrichtung verteilt mehrere im Wesentlichen in axialer Richtung langgestreckt verlaufende Schlitze 36 auf, die die Spannzange 30 zumindest teilweise radial durchdringen und jeweils zumindest in einem axialen Abschnitt der Spannzange 30 vorgesehen sind. Die Anzahl der Schlitze 36 und ihre Breite können derart bemessen sein, dass der Spannbereich der Spannzange 30 auf einen bestimmten Bereich eingeschränkt wird. Auf diese Weise kann die Rundlaufgenauigkeit des Spannzangensystems erhöht werden, da unter anderem Verkippungsfehler der Spannzange 30 innerhalb des Grundkörpers 10 reduziert werden. In gleicher Weise ist es im vorliegenden Spannzangensystem 1 bevorzugt, die Spannzange 30 ohne Schlitze 36 zu nutzen.

Um alternativ zur oben beschriebenen Verdrehsicherung eine relative Drehung der innerhalb des Grundkörpers 10 mit Hilfe der Spannmutter 50 verspannten Spannzange 30 im Vergleich zum Grundkörper 10 zu verhindern oder zu sperren, umfasst das erfindungsgemäße Spannzangensystem 1 eine andere Verdrehsicherung. Diese Verdrehsicherung ist durch formschlüssiges Zusammenwirken konstruktiver Elemente am Grundkörper 10 und der Spannzange 30 realisiert. Derartig zusammenwirkende formschlüssige Elemente werden vorzugsweise an den radial aneinander anliegenden Seiten, wie beispielsweise der radial äußeren Mantelfläche 34 und der inneren Mantelfläche 18 des Grundkörpers 10, ausgebildet. Zudem ist es bevorzugt, formschlüssige Elemente an sich gegenüberliegenden Stirnseiten von Grundkörper 10 und Spannzange 30 vorzusehen, die senkrecht zur Rotationsachse oder Längsachse R der Elemente des Spannzangensystems 1 angeordnet sind. In diesem Fall sind die formschlüssigen Elemente im Wesentlichen parallel zur Rotationsachse R ausgebildet.

Weiterhin bevorzugt ist die Verdrehsicherung zwischen Grundkörper 10 und Spannzange 30 über mindestens ein sich in axialer Richtung erstreckendes Mitnehmerelement 40 realisiert, dass in eine komplementär dazu geformte Ausnehmung 20 am Grundkörper 10 eingreift. Da die Ausnehmung 20 für das eingreifende Mitnehmerelemente 40 einen Hinterschnitt in Drehrichtung um die Rotationsachse R bildet, ist ein Verdrehen von Grundkörper 10 und Spannzange 30 relativ zueinander gesperrt oder blockiert.

Während vorzugsweise drei Mitnehmerelemente 40 und drei passend dazu geformte Ausnehmungen 20 vorgesehen sind, ist die Anzahl von Mitnehmerelementen 40 und Ausnehmungen 20 variabel.

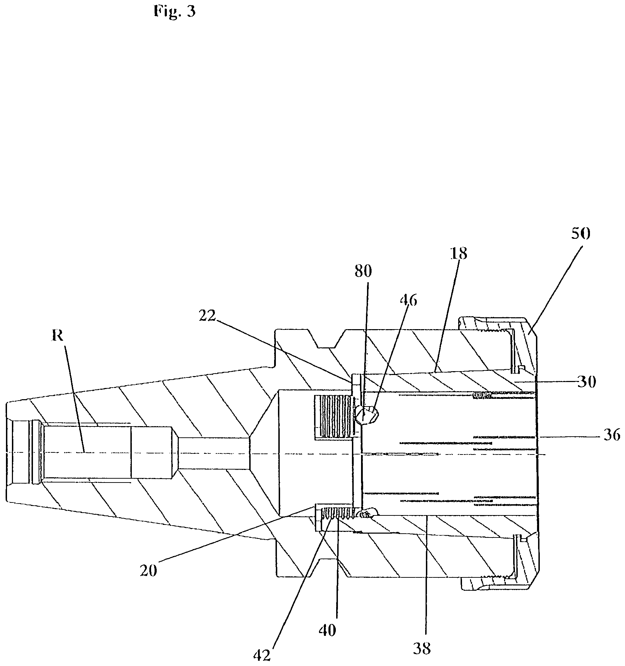

Bezogen auf den Umfang von Grundkörper 10 und Spannzange 30 und den Abstand zur Rotationsachse R sind die Mitnehmerelemente 40 und die Ausnehmungen 20 symmetrisch und/oder gleichmäßig um die Längsachse R der Spannzange 30 angeordnet, um beispielsweise eine Unwucht des Spannzangensystems 1 zu vermeiden. Gemäß der in den Figuren 3, 4, 5 gezeigten bevorzugten Ausführungsformen der Komponenten des Spannzangensystems 1 sind die Mitnehmerelemente 20 als axiale Eingriffsnasen ausgebildet. Diese Eingriffsnasen 40 greifen in radial einwärts offene Ausnehmungen 30 ein, so dass eine radiale Innenseite der vorzugsweise flächig ausgebildeten Eingriffsnasen 40 am Schaft 74 des Rotationswerkzeugs 70 anliegen. Eine freiliegende radiale Innenseite der Eingriffsnase 40 weist dazu bevorzugt eine Profilierung 42 auf, wie man anhand der Figuren 3 und 5 erkennen kann. Diese Profilierung 42 besteht beispielsweise aus in umfänglicher Richtung verlaufenden Rillen und Vorsprüngen, die den Halt des Schafts 74 des Rotationswerkzeugs 70 in der Spannzange 30 unterstützen. Es ist zudem bevorzugt, die Mitnehmerelemente 40 als Stifte oder flächige Stege mit eckiger oder abgerundeter Form auszubilden.

In kinematischer Umkehr der beschriebenen formschlüssigen Verdrehsicherung zwischen dem Grundkörper 10 und der Spannzange 30 ist es ebenfalls bevorzugt, die Mitnehmerelemente 40 am Grundkörper 10 und die Ausnehmungen 20 an der Spannzange 30 vorzusehen. In gleicher Weise ist eine gemischte Anordnung von Mitnehmerelementen 40 und Ausnehmungen 20 am Grundkörper 10 und der Spannzange 30 denkbar. Als weitere Alternative der formschlüssigen Verdrehsicherung ist eine ineinandergreifende Verzahnung an sich radial und/oder axial gegenüberliegenden Seiten von Grundkörper 10 und Spannzange 20 realisierbar. Dazu wären beispielsweise die Mantelflächen 18 und 34 sowie die Flächen 22 und 44 von Grundkörper 10 und Spannzange 30 geeignet. Vorzugsweise sind die Mitnehmerelemente 40 und die dazugehörigen Ausnehmungen 20 symmetrisch und/oder gleichverteilt um die Rotationsachse R angeordnet. Dadurch wird zusätzlich eine hohe Rundlaufgenauigkeit und Wuchtgüte bezüglich der vorliegenden Erfindung bereitgestellt, die im Stand der Technik (z.B. herkömmliche Rollenspannfutter) nicht erreichbar ist. Diese Rundlaufgenauigkeit und Wuchtgüte sind mit den gleichen konstruktiven Ausgestaltungen auch bei Einpressspannfuttern ohne Spannmutter zu erzielen.

Alternativ und/oder in Ergänzung zu den oben beschriebenen Verdrehsicherungen wird eine Verdrehsicherung durch das Zusammenwirken der Spannmutter 50 mit der Spannzange 30 bereitgestellt. Die Spannmutter 50 wird über das Gewinde 52 auf das Außengewinde 16 des Grundkörpers 10 aufgeschraubt, um auf diese Weise die Spannzange 30 innerhalb der Aufnahmebohrung 12 des Grundkörpers 10 zu verspannen. Nachdem die Spannzange 30 innerhalb des Grundkörpers 10 mit Hilfe der Spannmutter 50 verspannt worden ist, wird eine formschlüssige Verbindung zwischen Spannmutter 50 und Spannzange 30 hergestellt. Diese formschlüssige Verbindung lässt sich beispielsweise mit Hilfe einer Verrastung oder einer Stiftblockade realisieren. Da die Spannmutter 50 über die Gewinde 52, 16 am Grundkörper 10 befestigt ist, gewährleistet die formschlüssige Verbindung zwischen Spannmutter 50 und Spannzange 30 eine Verdrehsicherung zwischen Spannzange 30 und Grundkörper 10.

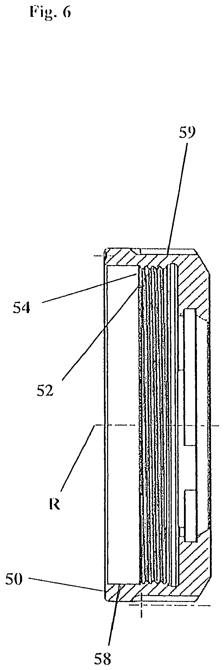

Während der Installation des Rotationswerkzeugs 70 im Spannzangensystem 1 wird die Spannzange 30 zunächst in der Aufnahmebohrung 12 des Grundkörpers 10 angeordnet. Dabei greifen die Mitnehmerelemente 40 in die dafür vorgesehenen Ausnehmungen 20 ein und gewährleisten ohne zusätzlichen Installationsaufwand die oben diskutierte Verdrehsicherung. Danach wird dann der Schaft 74 des Rotationswerkzeugs 70 in die Werkzeug-Aufnahmebohrung 32 eingesetzt und die Spannzange 30 mit Hilfe der Spannmutter 50 oder einer anderen Spannmethode bei Einpressspannzangen verspannt. Es ist ebenfalls bevorzugt, die Spannzange 30 oder die Einpressspannzange mit bereits installiertem Rotationswerkzeug 70 in den Grundkörper 10 einzusetzen und dann mit Hilfe der Spannmutter 50 oder entsprechenden Spannmethoden im Grundkörper 10 zu verspannen. Vorzugsweise wird zu diesem Zweck die in Fig. 6 gezeigte Spannmutter 50 eingesetzt. Ihr Innengewinde 52 wird dabei auf das Außengewinde 16 des Grundkörpers 10 aufgeschraubt, um die Spannzange 30 mit dem Rotationswerkzeug 70 in dem Grundkörper 10 einzupressen. Zu diesem Zweck umfasst die Spannmutter 50 ein äußeres Antriebsmittel 51, wie bspw. Sechskant.

Die Spannmutter 50 gemäß Fig. 6 umfasst einen Sicherungsabstand 58 zwischen einem Gewindeanfang 54 ihres Innengewindes 52 und einem axialen, den Grundkörper 10 zugewandten Aufsetzende 58 der Spannmutter 50. Dieser Sicherungsabstand 58 verhindert ein fehlerhaftes Einspannen der Spannzange 30 im Grundkörper 10. Falls nämlich ein Benutzer die Spannzange 30 versehentlich falsch in den Grundkörper 10 einsetzt - nämlich ohne einen Formschluss zwischen den Mitnehmerelementen 40 und den dazu passenden Ausnehmungen 20 herzustellen - taucht die Spannzange 30 nicht ausreichend tief in die Aufnahmebohrung 12 des Grundkörpers 10 ein und steht am werkzeugseitigen Ende des Grundkörpers 10 vor. Aufgrund des Sicherungsabstandes 58 und dem axialen Überstand der Spannzange 30 ist das Innengewinde 52 der Spannmutter 50 zu weit vom Außengewinde 12 am Grundkörper 10 entfernt, um damit verbunden werden zu können. Damit wird in dieser Situation ein fehlerhaftes Einspannen der Spannzange 30 verhindert. Erst wenn der Benutzer die Spannzange 30 korrekt in den Grundkörper 10 einsetzt, kann der Sicherungsabstand 58 der Spannmutter 50 überbrückt werden, so dass das Innengewinde 52 der Spannmutter 50 und das dazu passende Außengewinde 16 am Grundkörper 10 ineinander greifen und damit die Spannzange 30 im Grundkörper 10 gespannt werden kann.

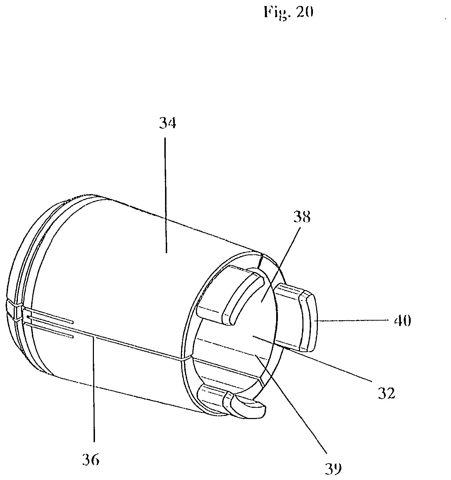

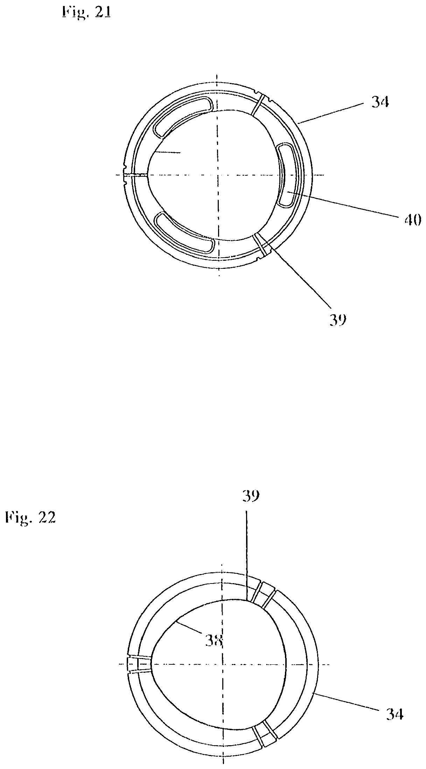

Gemäß einer weiteren bevorzugten Ausführungsform vorliegender Erfindung umfasst das Spannzangensystem 1 eine Verdrehsicherung, die eine relative Drehung des Rotationswerkzeugs 70 gegenüber der Spannzange 30 sperrt. Zu diesem Zweck weist die Werkzeugaufnahmebohrung 32 der Spannzange 30 eine unrunde oder polyederähnliche oder polyedrische radiale Innenkontur auf, wie in den Figuren 12 und 15 gezeigt und mit entsprechendem Text beschrieben worden ist. Zur Realisierung der Verdrehsicherung ist die äußere Form des Werkzeugschafts 74 des Rotationswerkzeugs 70 komplementär zur inneren Form der Werkzeugaufnahmebohrung 32 der Spannzange 30 ausgebildet (siehe Fig. 15). Daraus folgt, dass jede unrunde Kontur des Querschnitts der Werkzeugaufnahmebohrung 32 der Spannzange 30 mit einem in seiner Form daran angepassten Werkzeugschaft 74 des Rotationswerkzeugs 70 zu einer Sperre einer relativen Drehung von Spannzange 30 und Rotationswerkzeug 70 bezogen aufeinander und um die Längsachse des Rotationswerkzeugs 70 führt. Daraus folgt, dass die bevorzugten polyederähnlichen Kanten 39 in der Werkzeugaufnahmebohrung 32 mit entsprechenden polyederähnlichen Kanten 75 des Werkzeugschafts 74 des Rotationswerkzeugs 70 zusammenpassen und -wirken. Es versteht sich von selbst, dass die unrunde oder polyederähnliche oder polyedrische radiale Innenkontur der Werkzeugaufnahmebohrung 32 ein Dreieck, ein Viereck, ein Sechseck, einen Stern oder eine eckige Kontur mit abgerundeten Ecken aufweisen kann, um eine derartige Verdrehsicherung zu gewährleisten. Zur weiteren Veranschaulichung zeigt Fig. 20 eine bevorzugte Ausführungsform der Spannzange 30 mit polyederähnlicher Innenkontur und axialen Mitnehmerelementen 40, wie sie oben beschriebne sind. Die Figuren 21 und 22 zeigen die Draufsicht auf die Stirnseiten der Spannzange aus Fig. 20.

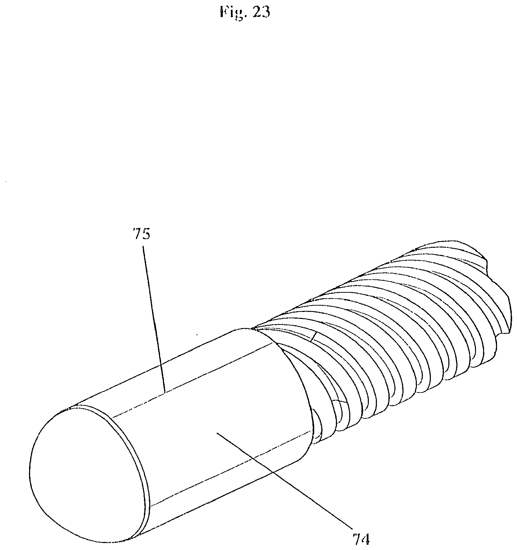

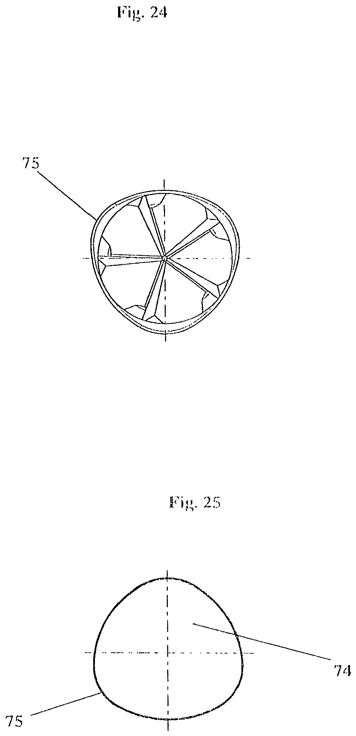

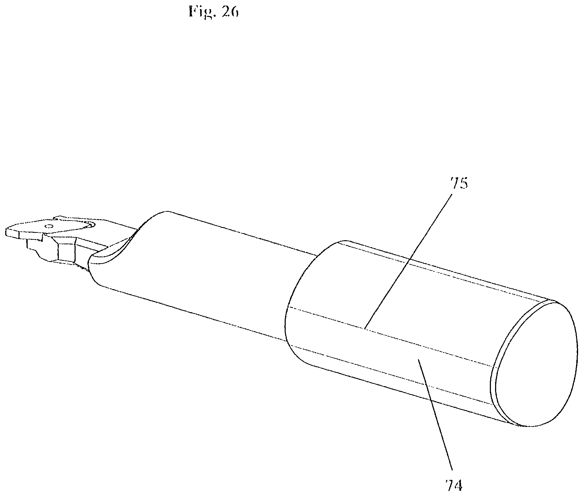

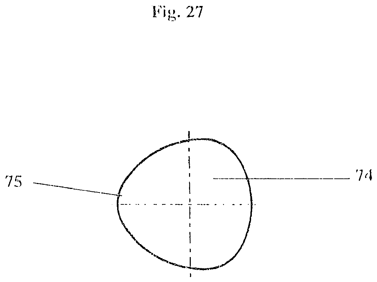

Passend zur polyederähnlichen Innenkontur der Spannzange 30 aus den Figuren 12, 15 und 20, die ebenfalls bevorzugt eine polyedrische Form aufweisen kann, umfasst der Werkzeugschaft 74 des Rotationswerkzeugs 70 eine komplementäre polyederähnliche Außenkontur. Es ist auch bevorzugt, den Werkzeugschaft 74 polyedrisch oder allgemein unrund zu formen. Beispielgebend zeigt Fig. 23 einen Fräser als Rotationswerkzeug 70 mit einem polyederähnlichen Werkzeugschaft 74. Jeweils eine Draufsicht auf die Stirnseite der Fräserspitze zeigt Fig. 24, während Fig. 25 die Stirnseite des polyederähnlichen Werkzeugschafts 74 wiedergibt. Fig. 26 zeigt einen Drehstahl mit polyederähnlichem Werkzeugschaft 74, während Fig. 27 die Stirnseite des polyederähnlichen Werkzeugschafts 74 des Drehstahls aus Fig. 26 illustriert. Das Spannzangensystem 1 in der Explosionsdarstellung der Fig. 15 zeigt beispielgebend den Einsatz der unterschiedlichen Komponenten Rotationswerkzeug 70, Grundkörper 10 sowie Spannzange 30 in Kombination mit der Spannmutter 50. Die Verdrehsicherung zwischen Grundkörper 10 und Spannzange 30 wird durch die bevorzugte polyederähnliche Außenkontur der Spannzange 30 in Kombination mit der polyederähnlichen Innenkontur der Aufnahmebohrung 12 des Grundkörpers 10 hergestellt. Des Weiteren wird eine weitere Verdrehsicherung zwischen Rotationswerkzeug 70, im Speziellen zwischen dem Werkzeugschaft 74 und der Innenfläche der Spannzange 30 umgesetzt. Hierbei wirken die polyederähnlichen Flächen und abgerundeten Kanten des Werkzeugschafts 74 mit den entsprechenden Flächen und Kanten der radial inneren Mantelfläche 38 der Spannzange 30 zusammen. Während die Spannmutter 50 die Spannzange 30 mit Rotationswerkzeug 70 im Grundkörper 10 verspannt, ist das in Fig. 15 gezeigte Spannzangensystem in gleicher Weise mit einer Einpressspannzange realisierbar. In diesem Fall würde eine Einpressspannzange mit polyederähnlicher Innen- und Außenkontur ohne eine Spannmutter 50 in der Aufnahmebohrung 12 des Grundkörpers 10 verspannt, beispielsweise eingeschrumpft, werden. Die in den Figuren 12, 17, 18 und 19 gezeigten bevorzugten Ausführungsformen der Spannzange sowie die Ausführungsformen des Grundkörpers in den Figuren 13 und 14 und des Weiteren die bevorzugten Ausführungsformen des Rotationswerkzeugs 70 in den Figuren 23, 24, 25, 26 und 27 sind in gleicher Weise in dem Spannzangensystem 1 der Fig. 15 einsetzbar.

Die oben beschriebenen polyederähnlichen Formen werden vorzugsweise auch polyedrisch oder allgemein unrund ausgebildet.

Gemäß einer weiteren bevorzugten Ausführungsform vorliegender Erfindung umfasst die Spannzange 30 eine Auszugssicherung für das Rotationswerkzeug 70 aus der Spannzange 30. Derartige formschlüssige Auszugssicherungen sind in EP 2 004 351 B1 beschrieben, auf die für eine detaillierte Beschreibung der konstruktiven Eigenschaften derartiger Auszugssicherungen verwiesen wird.

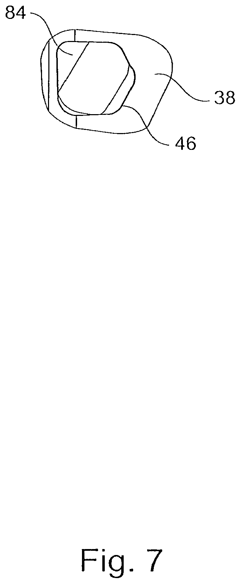

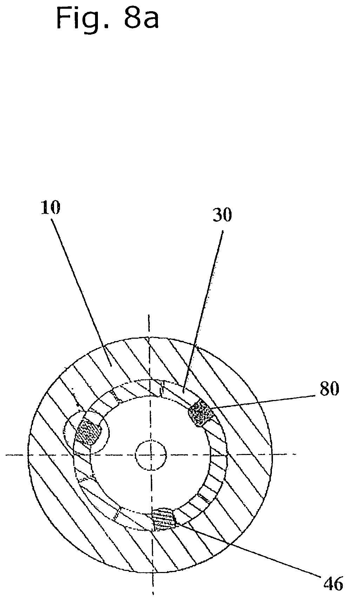

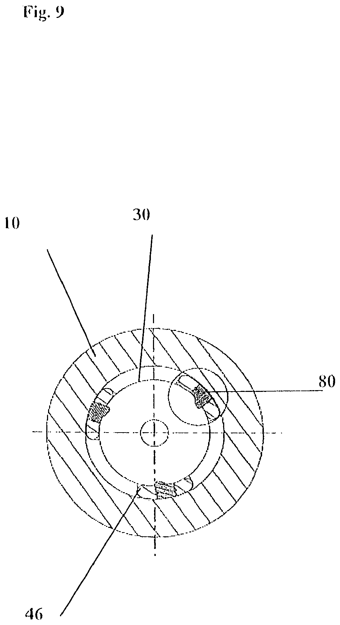

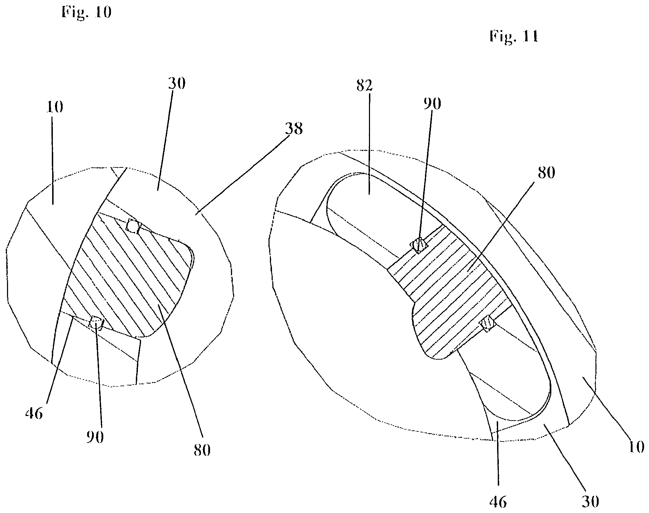

Zur Realisierung der Auszugssicherung ist im Bereich des dem Grundkörper 10 zugewandten Endes der Spannzange 30 mindestens eine an der radial inneren Mantelfläche 38 angeordnete Aussparung oder Durchtrittöffnung 46 ausgebildet. In dieser mindestens einen Aussparung oder Durchtrittsöffnung 46 ist ein Mitnehmerglied 80 passend eingefügt, vorzugsweise eine Art Nutenstein (vergleiche Fig. 7). Das Mitnehmerglied 80 ist über ein Halteelement 90 in dieser Aussparung oder Durchtrittsöffnung 46 fixiert. Bevorzugt werden ein O-Ring, ein Sprengring, ein Federring 90 oder eine Verklebung (nicht gezeigt) zur Befestigung des Mitnehmerglieds 80 in der Ausnehmung oder Durchtrittsöffnung 46 verwendete. Dies ist in den Figuren 8a, 9 bis 11 dargestellt. Die Mitnehmerglieder 80 sind gleichmäßig in Umfangsrichtung der Spannzange 30 verteilt angeordnet, wobei Figuren 8a und 10 eine Anordnung in Durchtrittsöffnungen 46 und Figuren 9 und 11 eine Anordnung der Nutensteine oder Mitnehmerglieder 80 in Aussparungen zeigen.

Das Mitnehmerglied 80 ist derart ausgebildet, dass es mindestens teilweise in die zentrische Werkzeugaufnahmebohrung 32 der Spannzange 30 hineinragt. Nach dem Einsetzen des Rotationswerkzeugs 70 in die Spannzange 30 greift das Mitnehmerglied 80 in mindestens eine Sperrnut 72 am Schaft 74 des Rotationswerkzeugs 70 ein. Es entsteht auf diese Weise eine formschlüssige Verbindung zwischen der Sperrnut 72 und dem eingreifenden Mitnehmerglied 80. Die mindestens eine Sperrnut 72 ist vorzugsweise gewindeartig am zylindrischen Werkzeugschaft 74 beginnend an einer Stirnseite des Zylinderschafts 74 und entlang der Umfangsfläche des Zylinderschafts 74 angeordnet. Diese auf der Umfangsfläche des Zylinderschafts 74 des Rotationswerkzeugs 70 liegenden Sperrnuten 72 sind bei linksdrehenden Werkzeugen 70 links steigend und bei rechtsdrehenden Rotationswerkzeugen 70 rechts steigend ausgebildet.

Dabei kann die mindestens eine Sperrnut 72 auch axial oder mit einer axialen Teilkomponente und damit ganz oder teilweise parallel zur Rotationsachse R ausgebildet sein, wodurch diese immer noch als Verdrehsicherung für das Werkzeug 70 innerhalb der Spannzangensystems 1 wirkt. In diesem Zusammenhang sind somit die Sperrnuten 72 am Werkzeugschaft 74 schraubenförmig, wendelförmig, kurvenförmig oder als Bajonettnut ausgebildet, können dabei auch axiale und/oder geradlinige Abschnitte aufweisen.

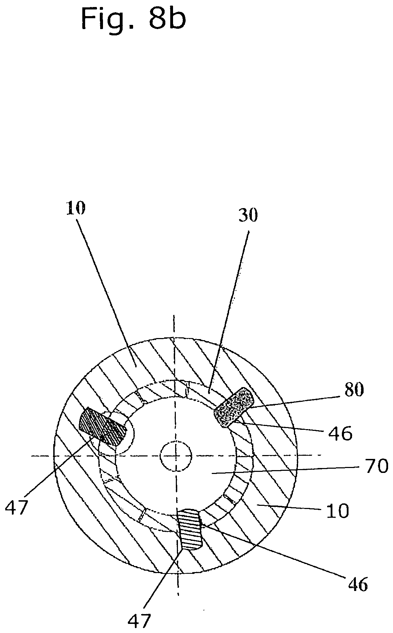

Die in Figur 8b dargestellte Ausführungsform stellt eine Weiterbildung der in Figur 8a dargestellten Ausführungsform dar. Hierbei greifen die Nutensteine bzw. Mitnehmerglieder 80, die in der Spannzange 30 aufgenommen sind, sowohl in den Schaft des in der Spannzange aufgenommenen Werkzeugs 70 ein, wie es in Figur 8a der Fall ist. Darüber hinaus greifen die Nutensteine 80 aber auch in Ausnehmungen 47 im Grundkörper 10 ein, so dass sie zugleich als Verdrehsicherung zwischen Spannzange 30 und Grundkörper 10 dienen. Dadurch können bei dieser Ausführungsform die Nutensteine sowohl die erste, wie auch die zweite Verdrehsicherung bilden aber auch eine Auszugssicherung für den Werkzeugschaft. Im dargestellten Ausführungsbeispiel sind hierbei drei gleichmäßig über einen Umfang verteilt angeordnete Nutensteine 80 vorgesehen, die in Durchgangsöffnungen 46 der Spannzange aufgenommen sind. Im Prinzip könnte für eine Drehsperre aber auch bereits nur ein Nutenstein verwendet werden, jedoch sind mehrere Nutensteine zweckmäßig, wobei die Anzahl der Nutensteine keinesfalls auf die Zahl 3 beschränkt ist, wie sie nur beispielhaft in Figur 8a und 8b dargestellt ist.

Fig. 7 zeigt den Nutenstein 80, der vorzugsweise in der Spannzange 30 als Mitnehmerglied 80 eingesetzt wird. Der Nutenstein 80 umfasst eine Grundplatte 84 mit einer speziellen äußeren Kontur. Die umfängliche Gestalt der aufnehmenden Aussparung oder Durchtrittsöffnung 46 ist an diese äußere Kontur der Grundplatte 84 angepasst, so dass der Nutenstein vorzugsweise nur in einer Lageorientierung in der Aussparung 46 anordenbar ist. Die Aussparung oder Durchtrittsöffnung 46 bildet zu diesem Zweck eine formschlüssige und passende Verbindung mit der Grundplatte 84 des Nutensteins 80. Eine vorbestimmte Asymmetrie von Aussparung/Durchtrittsöffnung 46 und Grundplatte 84 verhindert eine Fehlorientierung des Nutensteins 80.

Im Hinblick auf die Mitnehmerglieder 80 ist es zudem bevorzugt, diese austauschbar und somit nachrüstbar in den Ausnehmungen oder Durchtrittsöffnungen 46 anzuordnen.

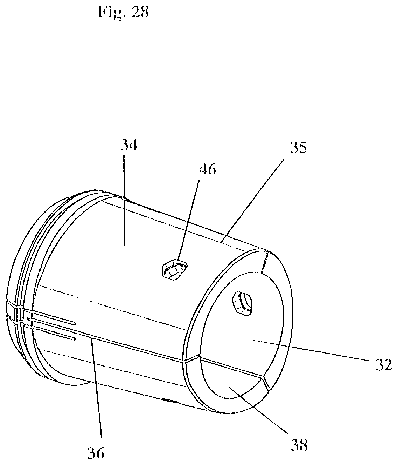

Des Weiteren zeigt Fig. 28 eine Spannzange 30 mit polyederähnlicher Außenkontur und runder Innenkontur, in der die oben beschriebenen Mitnehmerglieder 80 in dafür vorgesehene Öffnungen 46 einsetzbar sind.

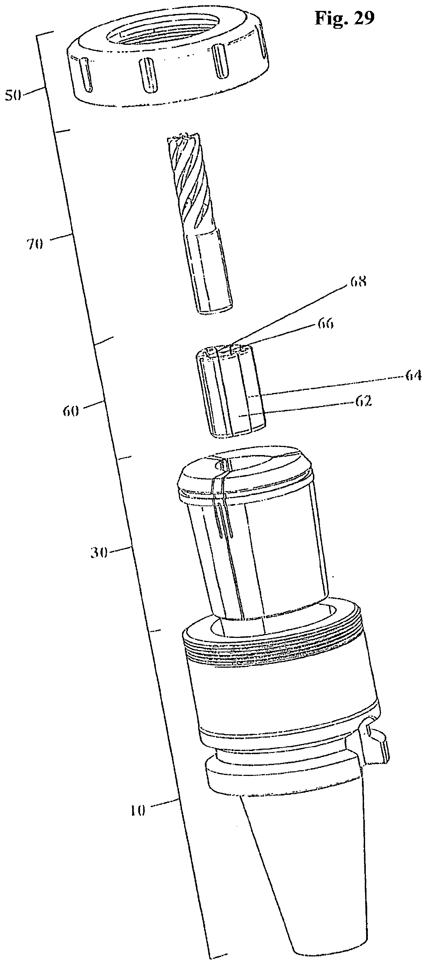

Es ist denkbar, dass der in die Werkzeugaufnahmebohrung 32 einzusetzende Werkzeugschaft 74 des Rotationswerkzeugs 70 so dünn ausgebildet ist, dass er sich nicht in der Werkzeug-aufnahmebohrung 32 verspannen lässt. Um trotzdem das Rotationswerkzeug 70 nutzen zu können, wird eine Reduzierhülse 60 als Ausgleichs- und Vermittlerelement zwischen Werkzeugschaft 74 und Spannzange 30 eingesetzt. Eine exemplarische Darstellung eines Spannzangensystems 1 mit der Reduzierhülse 60 ist in Fig. 29 dargestellt.

Das Spannzangensystem 1 der Fig. 29 nutzt den Grundkörper 10 mit einer Aufnahmebohrung 12, die eine polyederähnliche Kontur aufweist. Daran angepasst weist die Spannzange 30 eine polyederähnliche radiale äußere Mantelfläche 34 auf, so dass auf diese Weise eine Verdrehsicherung zwischen Spannzange 30 und Grundkörper 10 um deren Längsachse realisiert wird. Zur Gewährleistung einer weiteren Verdrehsicherung zwischen Rotationswerkzeug 70 und Spannzange 30 sind sowohl die Werkzeugaufnahmebohrung 32 der Spannzange 30 sowie der Werkzeugschaft 74 in polyederähnlicher Form ausgebildet. Da der polyederähnlich geformte Werkzeugschaft 74 zu klein ausgebildet ist, ist er nicht in der Werkzeugaufnahmebohrung 32 der Spannzange 30 verspannbar. Der Zwischenraum zwischen Werkzeugschaft 74 und innerer radialer Mantelfläche 38 der Spannzange 30 wird mit Hilfe der Reduzierhülse 60 ausgeglichen. Die Reduzierhülse 60 ist in ihrer radial äußeren Hülsenform 62 vorzugsweise komplementär zur radial inneren Mantelfläche 38 der Spannzange 30 ausgebildet. Daher wirken die Kanten 64 und Flächen der polyederähnlichen oder polyedrischen radial äußeren Hülsenform 62 mit den Kanten 39 und Flächen der radial inneren Mantelfläche 38 zusammen. In gleicher Weise ist die radial innere Hülsenform 66 der Reduzierhülse 60 an die polyederähnliche Form des Werkzeugschafts 74 angepasst. Daher wirken hier die polyederähnlichen oder polyedrischen Kanten 75 und Flächen des Werkzeugschafts 74 mit den Kanten 68 und Flächen der polyedrischen oder polyederähnlichen radial inneren Hülsenform 66 zusammen. Diese in ihrer Form aneinander angepassten Flächen von Rotationswerkzeug 70, Reduzierhülse 60, Spannzange 30 und Grundkörper 10 erzeugen die erfindungsgemäß bevorzugten Verdrehsicherungen, die die Integrität des Spannzangensystems 1, beispielsweise bei der Schwerzerspanung, gewährleisten. Obwohl das Spannzangensystem 1 der Fig. 29 mit Hilfe der Spannmutter verspannt wird, ist es in gleicher Weise bevorzugt, eine Einpressspannzange ohne Spannmutter 50 in Kombination mit dem gezeigten Rotationswerkzeug 70, der Reduzierhülse 60 und dem Grundkörper 10 zu verwenden.

Zur Installation des Spannzangensystems 1 werden das Rotationswerkzeug 70 direkt in die Spannzange 30 eingesetzt und verspannt oder das Rotationswerkzeug 70 wird in Kombination mit der Reduzierhülse 60 in die Spannzange 30 eingesetzt und dann verspannt. Über das Einsetzen des Rotationswerkzeugs 70 mit oder ohne Reduzierhülse 60 in die Spannzange 30 wird automatisch die Verdrehsicherung zwischen Rotationswerkzeug 70 und Grundkörper 10 realisiert, da sich die komplementär zueinander ausgebildeten Flächen von Rotationswerkzeug 70, Reduzierhülse 60 und Spannzange 30 aneinander abstützen, um ein Verdrehen der einzelnen Komponenten relativ zueinander zu sperren.

### Bezugszeichenliste

- 1: Spannzangensystem
- 10: Grundkörper
- 12: Aufnahmebohrung
- 14: Werkzeugseitiges Stirnende
- 16: Gewinde
- 18: Innere Mantelfläche
- 19: Polyederähnliche oder polyedrische Kante
- 20: Ausnehmung
- 22: Flächen
- 30: Spannzange
- 32: Werkzeug-Aufnahmebohrung
- 34: Radial äußere Mantelfläche
- 35: Polyederähnliche oder polyedrische Kante
- 36: Axiale Schlitze
- 38: Radial innere Mantelfläche
- 39: Polyederähnliche oder polyedrische Kante
- 40: Mitnehmerelementeingriffsnase
- 42: Radial innere Profilierung
- 44: Fläche
- 46: Aussparung oder Durchtrittsöffnung
- 50: Spannmutter
- 52: Innengewinde
- 54: Gewindeanfang des Innengewindes
- 56: Aufsetzende
- 58: Sicherungsabstand
- 60: Reduzierhülse
- 62: Radial äußere Hülsenform
- 64: Kanten der polyederähnlichen oder polyedrischen radial
äußeren Hülsenform
- 66: Radial innere Hülsenform
- 68: Kanten der polyedrischen oder polyederähnlichen radial inneren Hülsenform
- 70: Rotationswerkzeug
- 72: Sperrnut
- 74: Werkzeugschaft
- 75: Polyederähnliche oder polyedrische Kante
- 80: Mitnehmerglied, Nutenstein
- 84: Grundplatte
- 90: Halteelement

## Patentansprüche

1. Verdrehsicheres Spannzangensystem (1) für ein Rotationswerkzeug (70), das die folgenden Merkmale aufweist:
**a.** einen Grundkörper (10), in Form eines Spannfutters für Dreh-, Fräs- oder andere Rotationsmaschinen und dergleichen, mit einer Aufnahmebohrung (12) und einem Außengewinde (16),
**b.** eine Spannzange (30) mit einer Werkzeugaufnahmebohrung (32) für das Rotationswerkzeug (70), wobei die Spannzange (30) in der Aufnahmebohrung (12) des Grundkörpers (10) lösbar angeordnet und gegenüber dem Grundkörper (10) zum Zwecke eines Rotationsschlusses kraftschlüssig verspannbar ist,
**c.** eine Spannmutter(50), die zum Verspannen der Spannzange (30) am Grundkörper (10) vorgesehen und am Grundkörper im Bereich der Aufnahmebohrung (12) befestigbar ist,
**dadurch gekennzeichnet, dass**
das Spannsystem (1) mindestens eine erste Verdrehsicherung umfasst, welche eine relative Drehung der Spannzange (30) gegenüber dem Grundkörper (10) sperrt, wobei die erste Verdrehsicherung durch eine unrunde oder eine sich in Richtung des Grundkörpers verjüngende polyedrische oder polyederähnliche radial äußere Form der Spannzange (30) und eine daran angepasste radial innere unrunde oder polyedrische oder polyederähnliche Form der Aufnahmebohrung (12) des Grundkörpers (10) gebildet ist, wobei die unrunde oder polyedrische oder polyederähnliche äußere Form der Spannzange (30) und die unrunde oder polyedrische oder polyederähnliche, innere Form der Aufnahmebohrung (12) bezüglich ihrer Kontaktflächen jeweils zueinander komplementär ausgebildet sind und direkt aneinander anliegen.

2. Verdrehsicheres Spannzangensystem (1) für ein Rotationswerkzeug (70), das die folgenden Merkmale aufweist:
**a.** einen Grundkörper (10), insbesondere ein Spannfutter für Dreh-, Fräs- oder andere Rotationsmaschinen und dergleichen, mit einer Aufnahmebohrung (12),
**b.** eine Spannzange (30) mit einer Werkzeugaufnahmebohrung (32) für das Rotationswerkzeug (70), wobei die Spannzange (30) in der Aufnahmebohrung (12) des Grundkörpers (10) lösbar angeordnet und gegenüber dem Grundkörper (10) zum Zwecke eines Rotationsschlusses kraftschlüssig verspannbar ist,
**c.** eine erste Verdrehsicherung, welche eine relative Drehung der Spannzange (30) gegenüber dem Grundkörper sperrt,
**dadurch gekennzeichnet, dass**
eine Spannmutter (50) zum Verspannen der Spannzange (30) am Grundkörper (10) vorgesehen ist, die am Grundkörper (10) im Bereich der Aufnahmebohrung (12) befestigbar ist und dass die erste Verdrehsicherung durch eine formschlüssige Verbindung zwischen der Spannzange (30) und der Spannmutter (50) realisiert ist, nachdem die Spannzange (30) innerhalb des Grundkörpers (10) mit Hilfe der Spannmutter (50) verspannt worden ist, wobei die formschlüssige Verbindung vorzugsweise mit Hilfe einer Verrastung oder einer Stiftblockade realisiert ist.

3. Verdrehsicheres Spannzangensystem (1) für ein Rotationswerkzeug (70), das die folgenden Merkmale aufweist:
**a.** einen Grundkörper (10), insbesondere ein Spannfutter für Dreh-, Fräs- oder andere Rotationsmaschinen und dergleichen, mit einer Aufnahmebohrung (12),
**b.** eine Spannzange (30) mit einer Werkzeugaufnahmebohrung (32) für das Rotationswerkzeug (70), wobei die Spannzange (30) in der Aufnahmebohrung (12) des Grundkörpers (10) lösbar angeordnet und gegenüber dem Grundkörper (10) zum Zwecke eines Rotationsschlusses kraftschlüssig verspannbar ist,
**c.** eine erste Verdrehsicherung, welche eine relative Drehung der Spannzange (30) gegenüber dem Grundkörper sperrt,
**d.** vorzugsweise eine Spannmutter(50), die zum Verspannen der Spannzange (30) am Grundkörper (10) vorgesehen und am Grundkörper im Bereich der Aufnahmebohrung (12) befestigbar ist,
**dadurch gekennzeichnet, dass**
die erste Verdrehsicherung durch mindestens ein an der Spannzange (30) und /oder dem Grundkörper (10) vorgesehenes Mitnehmerelement (40) mit einem Abstand zur Rotationsachse R gebildet wird, welches in mindestens eine komplementär zu dem mindestens einem Mitnehmerelement (40) geformte Ausnehmung (20) im Grundkörper (10) und/oder in der Spannzange (30) zur Bildung der formschlüssigen Verbindung eingreift und vorzugsweise als Steckteil ausgebildet ist, wobei eine radiale Innenseiten des mindestens einem Mitnehmerelementes (40) am Schaft (74) des Rotatationswerkzeugs (70) anliegen kann.

4. Verdrehsicheres Spannzangensystem (1) gemäß Anspruch 3,
**dadurch gekennzeichnet, dass**
mehrere Mitnehmerelemente (40), vorzugsweise drei Mitnehmerelemente (40), vorgesehen sind, die symmetrisch und/oder gleichmäßig um eine Längssachse R der Aufnahmebohrung (12) und voneinander gleichmäßig beabstandet angeordnet sind und vorzugsweise als Eingriffnase ausgebildet sind.

5. Verdrehsicheres Spannzangensystem (1) gemäß Anspruch 4,
**dadurch gekennzeichnet, dass**
die Spannzange (30) an einer dem Grundkörper (10) zugewandten Stirnseite und parallel zur Längsachse R verlaufende axiale Mitnehmerelemente (40) aufweist, die in passend dazu geformte Ausnehmungen (20) im Grundkörper (10) eingreifen.

6. Verdrehsicheres Spannzangensystem (1) gemäß einem der Ansprüche 1 oder 3,
**dadurch gekennzeichnet, dass**
die Spannmutter (50) einen Sicherungsabstand (58) zwischen einem Gewindeanfang (54) und einem Aufsetzende (56) der Spannmutter (50) aufweist.

7. Verdrehsicheres Spannzangensystem (1) gemäß Anspruch 3,
**dadurch gekennzeichnet, dass**
die Spannzange (30) als Einpressspannzange ohne Spannmutter vorgesehen ist und dass die erste Verdrehsicherung durch eine formschlüssige Verbindung zwischen dem Grundkörper (10) und der Einpressspannzange (30) realisiert ist.

8. Verdrehsicheres Spannzangensystem (1) gemäß einem der vorhergehenden Ansprüche,
**dadurch gekennzeichnet, dass**
das Spannsystem (1) ein Rotationswerkzeug (70) mit einem Werkzeugschaft (74) aufweist, welches durch kraftschlüssiges Verspannen des Werkzeugschafts (74) in der Spannzange (30) befestigbar und durch eine axiale Auszugssicherung in der Spannzange (30) gegen ein axiales Auswandern in Richtung der Längsachse R gehalten ist.

9. Verdrehsicheres Spannzangensystem (1) gemäß Anspruch 8,
**dadurch gekennzeichnet, dass**
die axiale Auszugssicherung durch eine oder mehrere über den Umfang der Spannzange (30) verteilt angeordnete Mitnehmerglieder (80) gebildet ist, die in über den Umfang verteilt auf dem Werkzeugschaft (74) angeordnete Sperrnuten (72) eingreifen, wobei die Mitnehmerglieder (80) vorzugsweise durch Nutensteine, besonders bevorzugt drei über den Umfang der Spannzange (30) verteilt angeordnete Nutensteine, gebildet werden, die in der Spannzange (30) gehalten sind, vorzugsweise durch einen O-Ring, einen Sprengring, einen Federring oder eine Verklebung, oder wobei die Mitnehmerglieder (80) integral bzw. einstückig mit der Spannzange gebildet sind.

10. Verdrehsicheres Spannzangensystem (1) gemäß Anspruch 8 oder 9,
**dadurch gekennzeichnet, dass**
die Mitnehmerglieder (80) derart geformt sind und in Form angepassten Vertiefungen (46) in der Spannzange (30) angeordnet sind, so dass die Mitnehmerglieder (80) nur lageorientiert, vorzugsweise gemäß einer definierten Orientierung, in den Vertiefungen (46) anordenbar sind.

11. Verdrehsicheres Spannzangensystem (1) gemäß einem der Ansprüche 1 bis 10,
**dadurch gekennzeichnet, dass**
die Aufnahmebohrung (12) des Grundkörpers (10) einen flachen Konuswinkel aufweist, vorzugsweise kleiner als 3°.

12. Verdrehsicheres Spannzangensystem (1) gemäß Anspruch 1,
**dadurch gekennzeichnet, dass**
das Spannzangensystem (1) eine zweite Verdrehsicherung umfasst, welche eine relative Drehung des Rotationswerkzeugs (70) gegenüber der Spannzange (30) sperrt, indem eine radiale Außenkontur eines Werkzeugschafts (74) des Rotationswerkzeugs (70) an eine polyedrische oder polyederähnliche radiale Innenkontur der der Werkzeugaufnahmebohrung (32) derart anpassbar ist, dass eine formschlüssige Verbindung zwischen der Spannzange (30) und dem Rotationswerkzeug (70) entsteht.

## Claims

1. Rotationally secured collet system (1) for a rotary tool (70), having the following features:
a. a base body (10), in the form of a chuck for turning, milling or other rotary machines and the like, with a receiving bore (12) and an external thread (16),
b. a collet (30) with a tool-receiving bore (32) for the rotary tool (70), wherein the collet (30) is arranged detachably in the receiving bore (12) of the base body (10) and can be braced in a force-fitting manner with respect to the base body (10) for the purposes of locking rotation,
c. a clamping nut (50), which is provided for the purposes of bracing the collet (30) on the base body (10) and can be fastened to the base body in the region of the receiving bore (12),
**characterized in that**
the clamping system (1) comprises at least one first rotation-prevention means, which blocks a relative turning of the collet (30) with respect to the base body (10), wherein the first rotation-prevention means is formed by an unround or a polyhedral or polyhedron-like, radially outer form, tapering in the direction of the base body, of the collet (30), and by a radially inner, unround or polyhedral or polyhedron-like form of the receiving bore (12) of the base body (10), which form is adapted to said radially outer form of the collet, wherein the unround or polyhedral or polyhedron-like, outer form of the collet (30) and the unround or polyhedral or polyhedron-like, inner form of the receiving bore (12) are formed in a manner respectively complementary to one another with respect to the contact surfaces thereof and bear directly against one another.

2. Rotationally secured collet system (1) for a rotary tool (70), having the following features:
a. a base body (10), in particular a chuck for turning, milling or other rotary machines and the like, with a receiving bore (12),
b. a collet (30) with a tool-receiving bore (32) for the rotary tool (70), wherein the collet (30) is arranged detachably in the receiving bore (12) of the base body (10) and can be braced in a force-fitting manner with respect to the base body (10) for the purposes of locking rotation,
c. a first rotation-prevention means, which blocks a relative turning of the collet (30) with respect to the base body,
**characterized in that**
a clamping nut (50) for bracing the collet (30) on the base body (10), which can be fastened to the base body (10) in the region of the receiving bore (12), is provided, and **in that** the first rotation-prevention means is realized by a form-fitting connection between the collet (30) and the clamping nut (50) once the collet (30) has been braced within the base body (10) using the clamping nut (50), wherein the form-fitting connection is preferably realized using a latching engagement or a pin lock.

3. Rotationally secured collet system (1) for a rotary tool (70), having the following features:
a. a base body (10), in particular a chuck for turning, milling or other rotary machines and the like, with a receiving bore (12),
b. a collet (30) with a tool-receiving bore (32) for the rotary tool (70), wherein the collet (30) is arranged detachably in the receiving bore (12) of the base body (10) and can be braced in a force-fitting manner with respect to the base body (10) for the purposes of locking rotation,
c. a first rotation-prevention means, which blocks a relative turning of the collet (30) with respect to the base body,
d. preferably a clamping nut (50) which is provided for the purposes of bracing the collet (30) on the base body (10) and can be fastened to the base body in the region of the receiving bore (12),
**characterized in that**
the first rotation-prevention means is formed by at least one driver element (40), which is provided on the collet (30) and/or on the base body (10) at a distance from the axis of rotation R, engages into at least one recess (20), formed in a complementary manner to the at least one driver element (40), in the base body (10) and/or in the collet (30) for the purposes of forming the form-fitting connection, and is preferably formed as a plug-in part, wherein a radial inner side of the at least one driver element (40) can bear against the shaft (74) of the rotary tool (70).

4. Rotationally secured collet system (1) according to Claim 3,
**characterized in that**
a plurality of driver elements (40), preferably three driver elements (40), are provided, arranged symmetrically and/or uniformly about a longitudinal axis R of the receiving bore (12) and at a uniform distance from one another and preferably formed as an engagement lug.

5. Rotationally secured collet system (1) according to Claim 4,
**characterized in that**
the collet (30) has, running on an end face facing the base body (10) and parallel to the longitudinal axis R, axial driver elements (40), which engage into recesses (20), formed to match, in the base body (10).

6. Rotationally secured collet system (1) according to either of Claims 1 and 3,
**characterized in that**
the clamping nut (50) has a safety distance (58) between a beginning of the thread (54) and a place-on end (56) of the clamping nut (50).

7. Rotationally secured collet system (1) according to Claim 3,
**characterized in that**
the collet (30) is provided as a press-in collet without a clamping nut, and **in that** the first rotation-prevention means is realized by a form-fitting connection between the base body (10) and the press-in collet (30).

8. Rotationally secured collet system (1) according to one of the preceding claims,
**characterized in that**
the clamping system (1) has a rotary tool (70) with a tool shaft (74), which rotary tool can be fastened by bracing the tool shaft (74) in the collet (30) in a force-fitting manner and is held in the collet (30) against an axial displacement in the direction of the longitudinal axis R by an axial pull-out prevention means.

9. Rotationally secured collet system (1) according to Claim 8,
**characterized in that**
the axial pull-out prevention means is formed by one or more driver members (80) arranged in a manner distributed over the periphery of the collet (30) and engaging into blocking grooves (72) arranged in a manner distributed over the periphery on the tool shaft (74), wherein the driver members (80) are preferably formed by sliding blocks, particularly preferably three sliding blocks arranged in a manner distributed over the periphery of the collet (30), which are held in the collet (30), preferably by an O-ring, a snap ring, a spring ring or an adhesive bond, or wherein the driver members (80) are formed integrally or in one piece with the collet.

10. Rotationally secured collet system (1) according to Claim 8 or 9,
**characterized in that**
the driver members (80) are formed in such a manner and depressions (46) of an adapted form are arranged in the collet (30) such that the driver members (80) can be arranged only in a positionally oriented manner, preferably in accordance with a defined orientation, in the depressions (46).

11. Rotationally secured collet system (1) according to one of Claims 1 to 10,
**characterized in that**
the receiving bore (12) of the base body (10) has a shallow cone angle, preferably smaller than 3°.

12. Rotationally secured collet system (1) according to Claim 1,
**characterized in that**
the collet system (1) comprises a second rotation-prevention means, which blocks a relative turning of the rotary tool (70) with respect to the collet (30) by virtue of the fact that a radial outer contour of a tool shaft (74) of the rotary tool (70) can be adapted to a polyhedral or polyhedron-like, radial inner contour of the tool receiving bore (32) in such a manner that a form-fitting connection is produced between the collet (30) and the rotary tool (70).

## Revendications

1. Système de pince de serrage fixé en rotation (1) pour un outil rotatif (70), présentant les caractéristiques suivantes :
a. un corps de base (10) en forme de mandrin de serrage pour des machines de tournage, fraisage ou d'autres machines rotatives et similaires, avec un alésage de réception (12) et un filetage extérieur (16),
b. une pince de serrage (30) avec un alésage de réception d'outil (32) pour l'outil rotatif (70), la pince de serrage (30) étant disposée de manière amovible dans l'alésage de réception (12) du corps de base (10) et pouvant être serrée par engagement par force par rapport au corps de base (10) afin d'effectuer un blocage en rotation,
c. un écrou de serrage (50) qui est prévu pour serrer la pince de serrage (30) sur le corps de base (10) et qui peut être fixé au corps de base dans la région de l'alésage de réception (12),
**caractérisé en ce que**
le système de serrage (1) comprend au moins une première fixation antirotation qui bloque une rotation relative de la pince de serrage (30) par rapport au corps de base (10), la première fixation antirotation étant formée par une forme radialement extérieure de la pince de serrage (30) non circulaire ou polyédrique ou similaire à un polyèdre, se rétrécissant dans la direction du corps de base, et par une forme radialement intérieure de l'alésage de réception (12) du corps de base (10) adaptée à celle-ci, non circulaire ou polyédrique ou similaire à un polyèdre, la forme extérieure non circulaire ou polyédrique ou similaire à un polyèdre de la pince de serrage (30) et la forme intérieure non circulaire ou polyédrique ou similaire à un polyèdre de l'alésage de réception (12) étant réalisées de manière complémentaire l'une à l'autre en ce qui concerne leurs surfaces de contact et s'appliquant directement l'une contre l'autre.

2. Système de pince de serrage fixé en rotation (1) pour un outil rotatif (70), présentant les caractéristiques suivantes :
a. un corps de base (10) en particulier un mandrin de serrage pour des machines de tournage, fraisage ou d'autres machines rotatives et similaires, avec un alésage de réception (12),
b. une pince de serrage (30) avec un alésage de réception d'outil (32) pour l'outil rotatif (70), la pince de serrage (30) étant disposée de manière amovible dans l'alésage de réception (12) du corps de base (10) et pouvant être serrée par engagement par force par rapport au corps de base (10) afin d'effectuer un blocage en rotation,
c. une première fixation antirotation qui bloque une rotation relative de la pince de serrage (30) par rapport au corps de base,
**caractérisé en ce**
**qu'**un écrou de serrage (50) est prévu pour serrer la pince de serrage (30) sur le corps de base (10), lequel peut être fixé au corps de base (10) dans la région de l'alésage de réception (12) et **en ce que** la première fixation antirotation est réalisée par une liaison par engagement par correspondance de formes entre la pince de serrage (30) et l'écrou de serrage (50), après que la pince de serrage (30) a été serrée à l'intérieur du corps de base (10) à l'aide de l'écrou de serrage (50), la liaison par engagement par correspondance de formes étant de préférence réalisée à l'aide d'un encliquetage ou d'un blocage à goupille.

3. Système de pince de serrage fixé en rotation (1) pour un outil rotatif (70), présentant les caractéristiques suivantes :
a. un corps de base (10) en particulier un mandrin de serrage pour des machines de tournage, fraisage ou d'autres machines rotatives et similaires, avec un alésage de réception (12),
b. une pince de serrage (30) avec un alésage de réception d'outil (32) pour l'outil rotatif (70), la pince de serrage (30) étant disposée de manière amovible dans l'alésage de réception (12) du corps de base (10) et pouvant être serrée par engagement par force par rapport au corps de base (10) afin d'effectuer un blocage en rotation,
c. une première fixation antirotation qui bloque une rotation relative de la pince de serrage (30) par rapport au corps de base,
d. de préférence un écrou de serrage (50) qui est prévu pour serrer la pince de serrage (30) sur le corps de base (10) et qui peut être fixé au corps de base dans la région de l'alésage de réception (12),
**caractérisé en ce que**
la première fixation antirotation est formée à distance de l'axe de rotation R par au moins un élément d'entraînement (40) prévu au niveau de la pince de serrage (30) et/ou du corps de base (10), qui s'engage dans au moins un évidement (20) dans le corps de base (10) et/ou dans la pince de serrage (30), formé de manière complémentaire à l'au moins un élément d'entraînement (40), pour former la liaison par engagement par correspondance de formes et qui est de préférence réalisé sous forme de pièce enfichable, un côté intérieur radial de l'au moins un élément d'entraînement (40) pouvant s'appliquer contre l'arbre (74) de l'outil rotatif (70).

4. Système de pince de serrage fixé en rotation (1) selon la revendication 3,
**caractérisé en ce que**
plusieurs éléments d'entraînement (40), de préférence trois éléments d'entraînement (40), sont prévus, lesquels sont disposés symétriquement et/ou uniformément autour d'un axe longitudinal R de l'alésage de réception (12) et de manière équidistante les uns des autres et sont de préférence réalisés sous forme d'ergots d'engagement.

5. Système de pince de serrage fixé en rotation (1) selon la revendication 4,
**caractérisé en ce que**
la pince de serrage (30) présente des éléments d'entraînements axiaux (40) au niveau d'un côté frontal tourné vers le corps de base (10), s'étendant parallèlement à l'axe longitudinal R, lesquels s'engagent dans des évidements de forme correspondante (20) dans le corps de base (10).

6. Système de pince de serrage fixé en rotation (1) selon l'une quelconque des revendications 1 et 3,
**caractérisé en ce que**
l'écrou de serrage (50) présente un espacement de sécurité (58) entre un début de filetage (54) et une extrémité d'application (56) de l'écrou de serrage (50).

7. Système de pince de serrage fixé en rotation (1) selon la revendication 3,
**caractérisé en ce que**
la pince de serrage (30) est prévue sous forme de pince de serrage par pressage sans écrou de serrage et **en ce que** la première fixation antirotation est réalisée par une liaison par engagement par correspondance de formes entre le corps de base (10) et la pince de serrage par pressage (30).

8. Système de pince de serrage fixé en rotation (1) selon l'une quelconque des revendications précédentes,
**caractérisé en ce que**
le système de serrage (1) présente un outil rotatif (70) avec un arbre d'outil (74), qui peut être fixé par serrage par engagement par force de l'arbre d'outil (74) dans la pince de serrage (30) et qui est retenu par une fixation anti-retrait axiale dans la pince de serrage (30) pour l'empêcher de ressortir axialement dans la direction de l'axe longitudinal R.

9. Système de pince de serrage fixé en rotation (1) selon la revendication 8,
**caractérisé en ce que**
la fixation anti-retrait axiale est formée par un ou plusieurs organes d'entraînement (80) répartis sur la périphérie de la pince de serrage (30), qui s'engagent dans des rainures de blocage (72) réparties sur la périphérie et disposées sur l'arbre d'outil (74), les organes d'entraînement (80) étant de préférence retenus par des coulisseaux, en particulier préférablement par trois coulisseaux répartis sur la périphérie de la pince de serrage (30), qui sont retenus dans la pince de serrage (30), de préférence par un joint torique, un jonc, une bague à ressort ou un collage, ou les organes d'entraînement (80) étant formés intégralement ou d'une seule pièce avec la pince de serrage.

10. Système de pince de serrage fixé en rotation (1) selon la revendication 8 ou 9,
**caractérisé en ce que**
les organes d'entraînement (80) sont formés et disposés dans des renfoncements (46) de formes adaptées dans la pince de serrage (30) de telle sorte que les organes d'entraînement (80) puissent être disposés seulement de manière orientée en position, de préférence suivant une orientation définie, dans les renfoncements (46).

11. Système de pince de serrage fixé en rotation (1) selon l'une quelconque des revendications 1 à 10,
**caractérisé en ce que**
l'alésage de réception (12) du corps de base (10) présente un angle de conicité plat, de préférence inférieur à 3°.

12. Système de pince de serrage fixé en rotation (1) selon la revendication 1,
**caractérisé en ce que**
le système de pince de serrage (1) comprend une deuxième fixation antirotation qui bloque une rotation relative de l'outil rotatif (70) par rapport à la pince de serrage (30) par le fait qu'un contour radial extérieur d'une arbre d'outil (74) de l'outil rotatif (70) peut être adapté à un contour intérieur radial polyédrique ou similaire à un polyèdre de l'alésage de réception d'outil (32) de telle sorte qu'une liaison par engagement par correspondance de formes se produise entre la pince de serrage (30) et l'outil rotatif (70).
